# EUROPEAN PATENT APPLICATION

(11) **EP 4 654 619 A1**
(43) Date of publication of application: **26.11.2025**
(21) Application number: 23917304.0
(22) Date of filing: 20.12.2023
(51) Int. Cl.: H04W 4/02

(54) **POSITIONING PROCESSING METHOD, AND APPARATUS**

(30) Priority: 18.01.2023 CN 202310086243
(71) Applicant: Datang Mobile Communications Equipment Co., Ltd., Beijing 100085 (CN)
(72) Inventor: GU, Xiaofei, Beijing 100085 (CN)
(74) Representative: dompatent
(86) International application number: PCT/CN2023/140083
(87) International publication number: WO 2024/152837

(57) **Abstract**

The present disclosure provides a positioning processing method and device, relates to the technical field of the communication. The positioning processing method includes: receiving, by an access network node, a first request message; performing, by the access network node, an LMF entity selection or reselection based on the first request message to determine a target LMF entity; sending, by the access network node, a second request message to the target LMF entity. The second request message is used to instruct to perform a positioning processing on a UE.

## Description

### CROSS-REFERENCE TO RELATED APPLICATION

The present application claims a priority of the Chinese patent application No. 202310086243.0 with the name "Positioning processing method and device" filed on January 18, 2023, which is incorporated herein by reference in its entirety.

### TECHNICAL FIELD

The present disclosure relates to the field of communication technology, in particular to a positioning processing method and device.

### BACKGROUND

At present, in the 5th Generation Mobile Communication Technology (5G) network, the Access and Mobility Management Function (AMF) entity and the Radio Access Network (RAN) node are connected through the N2 interface. Other Network Function (NF) entities on the core network side, such as the Gateway Mobile Location Centre (GMLC) and Location Management Function (LMF) entity, need to transmit and transfer information unprocessed through the AMF entity and send relevant signaling to the RAN node when implementing UE positioning. Then the RAN node sends the relevant message to the User Equipment (UE). In order to meet the requirements of network agility, flexibility and scalability, it is considered that RAN adopts a service-oriented structure, that is, there is no N2 interface between the AMF entity and the RAN node, that is, the AMF no longer performs transparent transmission of information, and there is currently no solution for how to implement positioning processing in this scenario.

### SUMMARY

The present disclosure provides a positioning processing method and device, which solves the problem that there is currently no solution for positioning processing under the RAN service-oriented architecture.

The present disclosure provides a positioning processing method, including:
receiving, by an access network node, a first request message;
performing, by the access network node, a location management function (LMF) entity selection or reselection based on the first request message to determine a target LMF entity;
sending, by the access network node, a second request message to the target LMF entity; wherein the second request message is used to instruct to perform a positioning processing on a UE.

Optionally, the receiving, by an access network node, a first request message includes:
receiving, by the access network node, the first request message sent by a gateway mobile location center (GMLC); wherein the first request message is used to request to obtain a location information of the UE;
   or,
receiving, by the access network node, the first request message sent by the UE; wherein the first request message is used for at least one of: requesting to obtain the location information of the UE, instructing to provide the location information of the UE to a client or an application function entity, and requesting to obtain location assistance information.

Optionally, the first request message sent by the GMLC carries at least one of:

Subscription Permanent Identifier (SUPI) information of the UE;
type information of a client requesting the location information of the UE;
a quality of service (QoS) of the UE;
a geographical area description (GAD) graphics supported by the UE;
first indication information used to indicate a service type for requesting the location information of the UE;
a predefined positioning time of the requested location information of the UE;
second indication information used to indicate that the UE needs to be notified to provide the location information and/or the UE needs to be notified to perform privacy verification;
third indication information used to indicate a type of postponing transmission of the location information of the UE;
address information of the GMLC;
identifier information of a location delay request (LDR).

Optionally, after the receiving, by the access network node, the first request message sent by the GMLC, the positioning processing method further includes:
sending, by the access network node, a notification message to the UE based on the second indication information; wherein the notification message is used to notify the UE to provide the location information and/or request the privacy verification;
receiving, by the access network node, a notification response message sent by the UE; wherein the notification response message carries fourth indication information used to indicate whether to allow providing the location information and/or a result of the privacy verification;
in the case where the fourth indication information is used to indicate that it is allowed to providing the location information and/or the result of the privacy verification is authorized, performing, by the access network node, selecting or reselecting of the LMF entity.

Optionally, the positioning processing method further includes:
in a case where the access network node does not receive the notification response message, or the fourth indication information is used to indicate that it is not allowed to provide the location information and/or the result of the privacy verification is not authorized, sending, by the access network node, fifth indication information used to instruct the UE to reject to provide the location information to the GMLC.

Optionally, the notification response message further carries at least one of:
privacy setting information, used to instruct the UE to allow or reject to continue to provide the location information;
time information, used to instruct the UE to reject to continue to provide the location information before a target time and/or to reject to continue to provide the location information within a target duration.

Optionally, after the receiving, by the access network node, the first request message sent by the GMLC, the positioning processing method further includes:
sending, by the access network node, a first response message to the GMLC based on the third indication information; wherein the first response message is used to indicate confirmation of postponing transmission of the location information of the UE;
after the sending, by the access network node, the second request message to the target LMF entity, the positioning processing method further includes:
   receiving, by the access network node, the location information of the UE;
   sending, by the access network node, the location information of the UE to the GMLC according to a type of postponing transmission of the location information of the UE supported by the access network node.

Optionally, the type of postponing transmission of the location information of the UE includes at least one of:
periodically sending the location information of the UE;
sending the location information of the UE when a trigger condition is met.

Optionally, after the receiving, by the access network node, the first request message sent by the GMLC, the positioning processing method further includes :
in the case of an idle state of connection management (CM IDLE), sending, by the access network node, a third request message to the UE; wherein the third request message is used to request to establish a signaling connection to the UE;
receiving, by the access network node, a third response message sent by the UE;
in a case where the third response message indicates that the signaling connection is successful, performing, by the access network node, the selecting or reselecting of the LMF entity.

Optionally, after the receiving, by the access network node, the third response message sent by the UE, the positioning process method further includes:
in a case where the third response message indicates that the signaling connection fails, sending, by the access network node, a most recently obtained location information of the UE to the GMLC.

Optionally, after the receiving, by the access network node, the first request message sent by the GMLC, the positioning processing further includes:
receiving, by the access network node, a cancellation request message sent by the GMLC;
sending, by the access network node, sixth indication information for indicating cancellation of obtaining the location information of the UE to the target LMF entity and the UE respectively based on the cancellation request message.

Optionally, the first request message sent by the UE carries at least one of:
seventh indication information used to instruct sending a request message to the LMF entity;
QoS of the UE;
a maximum validity time for requesting the location information of the UE;
eighth indication information used to indicate the type of the requested location information of the UE;
a predefined positioning time of the requested location information of the UE;
identifier information of a client;
identifier information of an application function entity;
address information of the GMLC that sends location information to the client or the application function entity;
ninth indication information used to indicate a service type of requesting or providing the location information of the UE;
tenth indication information for instructing to assign a pseudonym;
eleventh indication information used to indicate a type of location assistance information;
twelfth indication information used to indicate an application scenario of the location assistance information.

Optionally, the first request message sent by the UE is a radio resource control (RRC) message.

Optionally, after the sending, by the access network node, the second request message to the target LMF entity, the positioning processing method further includes:
receiving, by the access network node, the location information of the UE sent by the target LMF entity;
sending, by the access network node, the location information to the UE; wherein the location information is carried in an RRC message, and the RRC message further carries at least one of:
   a timestamp of the location information;
   thirteenth indication information used to indicate whether the location information meets an accuracy requirement;
   fourteenth indication information used to indicate whether the location information is successfully provided to the client or the application function entity;
   fifteenth indication information used to indicate whether the client or the application function entity successfully processes the location information;
   sixteenth indication information is used to indicate a reason why the client or the application function entity fails to process the location information.

Optionally, the second request message carries at least one of:
identifier information associated with a location service (LCS);
identifier information of the access network node;
identifier information of a serving cell;
fifteenth indication information used to indicate a type of the client requesting to obtain the location information of the UE,
sixteenth indication information used to indicate a positioning protocol supported by the UE;
QoS of the UE;
positioning capability information of the UE;
GAD graphics supported by the UE;
seventeenth indication information used to indicate a service type of requesting or providing the location information of the UE;
eighteenth indication information used to indicate requesting the location information or location assistance information of the UE;
a list of subscribed location assistance information;
a predefined positioning time of the requested location information of the UE;
nineteenth indication information used to indicate a type of the location assistance information.

Optionally, after the sending, by the access network node, the second request message to the target LMF entity, the positioning processing method further includes:
receiving, by the access network node, a second response message sent by the target LMF entity;
sending, by the access network node, downlink positioning information to the UE based on the second response message; wherein the downlink positioning information carries location assistance information used for positioning measurement;
receiving, by the access network node, the positioning measurement result sent by the UE, and sending the positioning measurement result to the target LMF entity;
receiving, by the access network node, the location information of the UE sent by the target LMF entity based on the positioning measurement result, and sending the location information to the UE or GMLC.

An embodiment of the present disclosure provides a positioning processing method, including:
sending, by a GMLC, a first request message to an access network node; wherein the first request message is used to request to obtain location information of a UE.

Optionally, the first request message carries at least one of:
SUPI information of the UE;
type information of a client requesting the location information of the UE;
QoS of the UE;
a GAD graphics supported by the UE;
first indication information used to indicate a service type for requesting the location information of the UE;
a predefined positioning time of the requested location information of the UE;
second indication information used to indicate that the UE needs to be notified to provide the location information and/or the UE needs to be notified to perform privacy verification;
third indication information used to indicate a type of postponing transmission of the location information of the UE;
address information of the GMLC;
identifier information of an LDR.

Optionally, after the sending, by the GMLC, the first request message to the access network node, the positioning processing method further includes:
receiving, by the GMLC, a first response message sent by the access network node; wherein the first response message is used to indicate confirmation of postponing transmission of the location information of the UE;
receiving, by the GMLC, the location information of the UE sent by the access network node based on a type of postponing transmission of the location information of the UE supported by the access network node.

Optionally, the type of postponing transmission of the location information of the UE includes at least one of:
periodically sending the location information of the UE;
sending the location information of the UE when a trigger condition is met.

Optionally, after the sending, by the GMLC the first request message to the access network node, the positioning processing method further includes:
sending, by the GMLC, a cancellation request message to the access network node; wherein the cancellation request message is used to indicate cancellation of obtaining the location information of the UE.

An embodiment of the present disclosure provides a positioning processing method, including:
sending, by a UE, a first request message to an access network node; wherein the first request message is used for at least one of: requesting to obtain location information of the UE, instructing to provide the location information of the UE to a client or an application function entity, and requesting to obtain location assistance information.

Optionally, the first request message carries at least one of:
seventh indication information used to instruct sending a request message to the LMF entity;
QoS of the UE;
a maximum validity time for requesting the location information of the UE;
eighth indication information used to indicate the type of the requested location information of the UE;
a predefined positioning time of the requested location information of the UE;
identifier information of a client;
identifier information of an application function entity;
address information of the GMLC that sends location information to the client or the application function entity;
ninth indication information used to indicate a service type of requesting or providing the location information of the UE;
tenth indication information for instructing to assign a pseudonym;
eleventh indication information used to indicate a type of location assistance information;
twelfth indication information used to indicate an application scenario of the location assistance information.

Optionally, the first request message sent by the UE is an RRC message.

Optionally, after the sending, by the UE, the first request message to the access network node, the positioning processing method further includes:
receiving, by the UE, the location information of the UE sent by the access network node; wherein the location information is carried in an RRC message, and the RRC message further carries at least one of:
a timestamp of the location information;
thirteenth indication information used to indicate whether the location information meets an accuracy requirement;
fourteenth indication information used to indicate whether the location information is successfully provided to the client or the application function entity;
fifteenth indication information used to indicate whether the client or the application function entity successfully processes the location information;
sixteenth indication information is used to indicate a reason why the client or the application function entity fails to process the location information.

Optionally, after the sending, by the UE, the first request message to the access network node, the positioning processing method further includes:
receiving, by the UE, downlink positioning information sent by the access network node; wherein the downlink positioning information carries location assistance information used for positioning measurement;
performing, by the UE, the positioning measurement based on the downlink positioning information, obtaining a positioning measurement result and sending the positioning measurement result to the access network node; wherein the positioning measurement result is used to perform position solution processing on the UE;
receiving, by the UE, the location information of the UE sent by the access network node.

An embodiment of the present disclosure provides a positioning processing method, including:
receiving, by an LMF entity, a second request message sent by an access network node; wherein the second request message is used to instruct positioning processing of a UE.

Optionally, after the receiving, by the LMF entity, the second request message sent by the access network node, the positioning processing method further includes:
sending, by the LMF entity, a second response message to the access network node; wherein the second response message is used to indicate sending downlink positioning information to a UE, and the downlink positioning information carries location assistance information for positioning measurement;
receiving, by the LMF entity, a positioning measurement result of the UE sent by the access network node;
performing, by the LMF entity, position solution processing on the UE based on the positioning measurement result, obtaining the location information of the UE and sending the location information of the UE to the access network node.

Optionally, the second request message carries at least one of:
identifier information associated with an LCS;
identifier information of the access network node;
identifier information of a serving cell;
fifteenth indication information used to indicate a type of the client requesting to obtain the location information of the UE,
sixteenth indication information used to indicate a positioning protocol supported by the UE;
QoS of the UE;
positioning capability information of the UE;
GAD graphics supported by the UE;
seventeenth indication information used to indicate a service type of requesting or providing the location information of the UE;
eighteenth indication information used to indicate requesting the location information or location assistance information of the UE;
a list of subscribed location assistance information;
a predefined positioning time of the requested location information of the UE;
nineteenth indication information used to indicate a type of the location assistance information.

An embodiment of the present disclosure provides a positioning processing device, including a memory, a transceiver, and a processor; wherein
the memory is used to store a computer program; the transceiver is used to send and receive data under the control of the processor; the processor is used to read the computer program in the memory and perform the following operations:
receiving a first request message;
performing an LMF entity selection or reselection based on the first request message to determine a target LMF entity;
sending a second request message to the target LMF entity; wherein the second request message is used to instruct to perform a positioning processing on a UE.

Optionally, the processor is used to read the computer program in the memory and perform the following operations:
receiving the first request message sent by a GMLC; wherein the first request message is used to request to obtain a location information of the UE;
   or,
receiving the first request message sent by the UE; wherein the first request message is used for at least one of: requesting to obtain the location information of the UE, instructing to provide the location information of the UE to a client or an application function entity, and requesting to obtain location assistance information.

Optionally, the first request message sent by the GMLC carries at least one of:
SUPI information of the UE;
type information of a client requesting the location information of the UE;
a QoS of the UE;
a geographical area description (GAD) graphics supported by the UE;
first indication information used to indicate a service type for requesting the location information of the UE;
a predefined positioning time of the requested location information of the UE;
second indication information used to indicate that the UE needs to be notified to provide the location information and/or the UE needs to be notified to perform privacy verification;
third indication information used to indicate a type of postponing transmission of the location information of the UE;
address information of the GMLC;
identifier information of an LDR.

Optionally, the processor is used to read the computer program in the memory and perform the following operations:
sending a notification message to the UE based on the second indication information; wherein the notification message is used to notify the UE to provide the location information and/or request the privacy verification;
receiving a notification response message sent by the UE; wherein the notification response message carries fourth indication information used to indicate whether to allow providing the location information and/or a result of the privacy verification;
in the case where the fourth indication information is used to indicate that it is allowed to providing the location information and/or the result of the privacy verification is authorized, performing LMF entity selection or reselection.

Optionally, the processor is used to read the computer program in the memory and perform the following operations:
in a case where the notification response message is not received, or the fourth indication information is used to indicate that it is not allowed to provide the location information and/or the result of the privacy verification is not authorized, sending fifth indication information used to instruct the UE to reject to provide the location information to the GMLC.

Optionally, the processor is used to read the computer program in the memory and perform the following operations:
sending a first response message to the GMLC based on the third indication information; wherein the first response message is used to indicate confirmation of postponing transmission of the location information of the UE;
receiving the location information of the UE;
sending the location information of the UE to the GMLC according to a type of postponing transmission of the location information of the UE supported.

Optionally, the processor is used to read the computer program in the memory and perform the following operations:
in the case where the UE is in a CM IDLE state, sending a third request message to the UE; wherein the third request message is used to request to establish a signaling connection to the UE;
receiving a third response message sent by the UE;
in a case where the third response message indicates that the signaling connection is successful, performing the selecting or reselecting of the LMF entity.

Optionally, the processor is used to read the computer program in the memory and perform the following operations:
in a case where the third response message indicates that the signaling connection fails, sending a most recently obtained location information of the UE to the GMLC.

Optionally, the processor is used to read the computer program in the memory and perform the following operations:
receiving a cancellation request message sent by the GMLC;
sending sixth indication information for indicating cancellation of obtaining the location information of the UE to the target LMF entity and the UE respectively based on the cancellation request message.

Optionally, the processor is used to read the computer program in the memory and perform the following operations:
receiving the location information of the UE sent by the target LMF entity;
sending the location information to the UE; wherein the location information is carried in an RRC message, and the RRC message further carries at least one of:
   a timestamp of the location information;
   thirteenth indication information used to indicate whether the location information meets an accuracy requirement;
   fourteenth indication information used to indicate whether the location information is successfully provided to the client or the application function entity;
   fifteenth indication information used to indicate whether the client or the application function entity successfully processes the location information;
   sixteenth indication information is used to indicate a reason why the client or the application function entity fails to process the location information.

Optionally, the processor is used to read the computer program in the memory and perform the following operations:
receiving a second response message sent by the target LMF entity;
sending downlink positioning information to the UE based on the second response message; wherein the downlink positioning information carries location assistance information used for positioning measurement;
receiving the positioning measurement result sent by the UE, and sending the positioning measurement result to the target LMF entity;
receiving the location information of the UE sent by the target LMF entity based on the positioning measurement result, and sending the location information to the UE or GMLC.

An embodiment of the present disclosure provides a positioning processing device, including:
a first receiving unit, used to receive a first request message;
a first processing unit, used to perform an LMF entity selection or reselection based on the first request message to determine a target LMF entity;
a first sending unit, used to send a second request message to the target LMF entity; wherein the second request message is used to instruct to perform a positioning processing on a UE.

Optionally, the first receiving unit is further used to:
receive the first request message sent by a GMLC; wherein the first request message is used to request to obtain a location information of the UE;
   or,
receive the first request message sent by the UE; wherein the first request message is used for at least one of: requesting to obtain the location information of the UE, instructing to provide the location information of the UE to a client or an application function entity, and requesting to obtain location assistance information.

Optionally, the first request message sent by the GMLC carries at least one of:
SUPI information of the UE;
type information of a client requesting the location information of the UE;
a QoS of the UE;
a geographical area description (GAD) graphics supported by the UE;
first indication information used to indicate a service type for requesting the location information of the UE;
a predefined positioning time of the requested location information of the UE;
second indication information used to indicate that the UE needs to be notified to provide the location information and/or the UE needs to be notified to perform privacy verification;
third indication information used to indicate a type of postponing transmission of the location information of the UE;
address information of the GMLC;
identifier information of an LDR.

Optionally, the positioning processing device further includes:
a second receiving unit, used to send a notification message to the UE based on the second indication information; wherein the notification message is used to notify the UE to provide the location information and/or request the privacy verification;
a third receiving unit, used to receive a notification response message sent by the UE; wherein the notification response message carries fourth indication information used to indicate whether to allow providing the location information and/or a result of the privacy verification;
a second processing unit, used to, in the case where the fourth indication information is used to indicate that it is allowed to providing the location information and/or the result of the privacy verification is authorized, perform LMF entity selection or reselection.

Optionally, the positioning processing device further includes:
a second sending unit, used to, in a case where the notification response message is not received, or the fourth indication information is used to indicate that it is not allowed to provide the location information and/or the result of the privacy verification is not authorized, send fifth indication information used to instruct the UE to reject to provide the location information to the GMLC.

Optionally, the notification response message further carries at least one of:
privacy setting information, used to instruct the UE to allow or reject to continue to provide the location information;
time information, used to instruct the UE to reject to continue to provide the location information before a target time and/or to reject to continue to provide the location information within a target duration.

Optionally, the positioning processing device further includes:
a third sending unit, used to send a first response message to the GMLC based on the third indication information; wherein the first response message is used to indicate confirmation of postponing transmission of the location information of the UE;
a fourth receiving unit, used to receive the location information of the UE;
a fourth sending unit, used to send the location information of the UE to the GMLC according to a type of postponing transmission of the location information of the UE supported.

Optionally, the type of postponing transmission of the location information of the UE includes at least one of:
periodically sending the location information of the UE;
sending the location information of the UE when a trigger condition is met.

Optionally, the positioning processing device further includes:
a fifth sending unit, used to, in the case where the UE is in a CM IDLE state, send a third request message to the UE; wherein the third request message is used to request to establish a signaling connection to the UE;
a fifth receiving unit, used to receive a third response message sent by the UE;
a fourth processing unit, used to, in a case where the third response message indicates that the signaling connection is successful, perform LMF entity selection or reselection.

Optionally, the positioning processing device further includes:
a sixth sending unit, used to, in a case where the third response message indicates that the signaling connection fails, send a most recently obtained location information of the UE to the GMLC.

Optionally, the positioning processing device further includes:
a sixth receiving unit, used to receive a cancellation request message sent by the GMLC;
a fifth processing unit, used to send sixth indication information for indicating cancellation of obtaining the location information of the UE to the target LMF entity and the UE respectively based on the cancellation request message.

Optionally, the first request message sent by the UE carries at least one of:
seventh indication information used to instruct sending a request message to the LMF entity;
QoS of the UE;
a maximum validity time for requesting the location information of the UE;
eighth indication information used to indicate the type of the requested location information of the UE;
a predefined positioning time of the requested location information of the UE;
identifier information of a client;
identifier information of an application function entity;
address information of the GMLC that sends location information to the client or the application function entity;
ninth indication information used to indicate a service type of requesting or providing the location information of the UE;
tenth indication information for instructing to assign a pseudonym;
eleventh indication information used to indicate a type of location assistance information;
twelfth indication information used to indicate an application scenario of the location assistance information.

Optionally, the first request message sent by the UE is an RRC message.

Optionally, the positioning processing device further includes:
a seventh receiving unit, used to receive the location information of the UE sent by the target LMF entity;
a seventh sending unit, used to send the location information to the UE; wherein the location information is carried in an RRC message, and the RRC message further carries at least one of:
   a timestamp of the location information;
   thirteenth indication information used to indicate whether the location information meets an accuracy requirement;
   fourteenth indication information used to indicate whether the location information is successfully provided to the client or the application function entity;
   fifteenth indication information used to indicate whether the client or the application function entity successfully processes the location information;
   sixteenth indication information is used to indicate a reason why the client or the application function entity fails to process the location information.

Optionally, the positioning processing device further includes:
an eighth receiving unit, used to receive a second response message sent by the target LMF entity;
an eighth sending unit, used to send downlink positioning information to the UE based on the second response message; wherein the downlink positioning information carries location assistance information used for positioning measurement;
a ninth receiving unit, used to receive the positioning measurement result sent by the UE, and sending the positioning measurement result to the target LMF entity;
a tenth receiving unit, used to receive the location information of the UE sent by the target LMF entity based on the positioning measurement result, and sending the location information to the UE or GMLC.

Optionally, the second request message carries at least one of:
identifier information associated with an LCS;
identifier information of the access network node;
identifier information of a serving cell;
fifteenth indication information used to indicate a type of the client requesting to obtain the location information of the UE,
sixteenth indication information used to indicate a positioning protocol supported by the UE;
QoS of the UE;
positioning capability information of the UE;
GAD graphics supported by the UE;
seventeenth indication information used to indicate a service type of requesting or providing the location information of the UE;
eighteenth indication information used to indicate requesting the location information or location assistance information of the UE;
a list of subscribed location assistance information;
a predefined positioning time of the requested location information of the UE;
nineteenth indication information used to indicate a type of the location assistance information.

An embodiment of the present disclosure provides a positioning processing device, including a memory, a transceiver, and a processor; wherein
the memory is used to store a computer program; the transceiver is used to send and receive data under the control of the processor; the processor is used to read the computer program in the memory and perform the following operations:
sending a first request message to an access network node; wherein the first request message is used to request to obtain location information of a UE.

Optionally, the first request message carries at least one of:
SUPI information of the UE;
type information of a client requesting the location information of the UE;
QoS of the UE;
a GAD graphics supported by the UE;
first indication information used to indicate a service type for requesting the location information of the UE;
a predefined positioning time of the requested location information of the UE;
second indication information used to indicate that the UE needs to be notified to provide the location information and/or the UE needs to be notified to perform privacy verification;
third indication information used to indicate a type of postponing transmission of the location information of the UE;
address information of the GMLC;
identifier information of an LDR.

Optionally, the processor is used to read the computer program in the memory and perform the following operations:
receiving a first response message sent by the access network node; wherein the first response message is used to indicate confirmation of postponing transmission of the location information of the UE;
receiving the location information of the UE sent by the access network node based on a type of postponing transmission of the location information of the UE supported by the access network node.

Optionally, the processor is used to read the computer program in the memory and perform the following operations:
sending a cancellation request message to the access network node; wherein the cancellation request message is used to indicate cancellation of obtaining the location information of the UE.

An embodiment of the present disclosure provides a positioning processing device, including:
a first sending unit, used to send a first request message to an access network node; wherein the first request message is used to request to obtain location information of a UE.

Optionally, the first request message carries at least one of:
SUPI information of the UE;
type information of a client requesting the location information of the UE;
QoS of the UE;
a GAD graphics supported by the UE;
first indication information used to indicate a service type for requesting the location information of the UE;
a predefined positioning time of the requested location information of the UE;
second indication information used to indicate that the UE needs to be notified to provide the location information and/or the UE needs to be notified to perform privacy verification;
third indication information used to indicate a type of postponing transmission of the location information of the UE;
address information of the GMLC;
identifier information of an LDR.

Optionally, the positioning processing device further includes:
a first receiving unit, used to receive a first response message sent by the access network node; wherein the first response message is used to indicate confirmation of postponing transmission of the location information of the UE;
a second receiving unit, used to receive the location information of the UE sent by the access network node based on a type of postponing transmission of the location information of the UE supported by the access network node.

Optionally, the type of postponing transmission of the location information of the UE includes at least one of:
periodically sending the location information of the UE;
sending the location information of the UE when a trigger condition is met.

Optionally, the positioning processing device further includes:
a second sending unit, used to send a cancellation request message to the access network node; wherein the cancellation request message is used to indicate cancellation of obtaining the location information of the UE.

An embodiment of the present disclosure provides a positioning processing device, including a memory, a transceiver, and a processor;
the memory is used to store a computer program; the transceiver is used to send and receive data under the control of the processor; the processor is used to read the computer program in the memory and perform the following operations:
sending a first request message to an access network node; wherein the first request message is used for at least one of: requesting to obtain location information of the UE, instructing to provide the location information of the UE to a client or an application function entity, and requesting to obtain location assistance information.

Optionally, the first request message carries at least one of:
seventh indication information used to instruct sending a request message to the LMF entity;
QoS of the UE;
a maximum validity time for requesting the location information of the UE;
eighth indication information used to indicate the type of the requested location information of the UE;
a predefined positioning time of the requested location information of the UE;
identifier information of a client;
identifier information of an application function entity;
address information of the GMLC that sends location information to the client or the application function entity;
ninth indication information used to indicate a service type of requesting or providing the location information of the UE;
tenth indication information for instructing to assign a pseudonym;
eleventh indication information used to indicate a type of location assistance information;
twelfth indication information used to indicate an application scenario of the location assistance information.

Optionally, the processor is used to read the computer program in the memory and perform the following operations:
receiving the location information of the UE sent by the access network node; wherein the location information is carried in an RRC message, and the RRC message further carries at least one of:
a timestamp of the location information;
thirteenth indication information used to indicate whether the location information meets an accuracy requirement;
fourteenth indication information used to indicate whether the location information is successfully provided to the client or the application function entity;
fifteenth indication information used to indicate whether the client or the application function entity successfully processes the location information;
sixteenth indication information is used to indicate a reason why the client or the application function entity fails to process the location information.

Optionally, the processor is used to read the computer program in the memory and perform the following operations:
receiving downlink positioning information sent by the access network node; wherein the downlink positioning information carries location assistance information used for positioning measurement;
performing the positioning measurement based on the downlink positioning information, obtaining a positioning measurement result and sending the positioning measurement result to the access network node; wherein the positioning measurement result is used to perform position solution processing on the UE;
receiving the location information of the UE sent by the access network node.

An embodiment of the present disclosure provides a positioning processing device, including:
a sending unit, used to send a first request message to an access network node; wherein the first request message is used for at least one of: requesting to obtain location information of the UE, instructing to provide the location information of the UE to a client or an application function entity, and requesting to obtain location assistance information.

Optionally, the first request message carries at least one of:
seventh indication information used to instruct sending a request message to the LMF entity;
QoS of the UE;
a maximum validity time for requesting the location information of the UE;
eighth indication information used to indicate the type of the requested location information of the UE;
a predefined positioning time of the requested location information of the UE;
identifier information of a client;
identifier information of an application function entity;
address information of the GMLC that sends location information to the client or the application function entity;
ninth indication information used to indicate a service type of requesting or providing the location information of the UE;
tenth indication information for instructing to assign a pseudonym;
eleventh indication information used to indicate a type of location assistance information;
twelfth indication information used to indicate an application scenario of the location assistance information.

Optionally, the first request message is an RRC message.

Optionally, the positioning processing device further includes:
a first receiving unit, used to receive the location information of the UE sent by the access network node; wherein the location information is carried in an RRC message, and the RRC message further carries at least one of:
a timestamp of the location information;
thirteenth indication information used to indicate whether the location information meets an accuracy requirement;
fourteenth indication information used to indicate whether the location information is successfully provided to the client or the application function entity;
fifteenth indication information used to indicate whether the client or the application function entity successfully processes the location information;
sixteenth indication information is used to indicate a reason why the client or the application function entity fails to process the location information.

Optionally, the positioning processing device further includes:
a second receiving unit, used to receive downlink positioning information sent by the access network node; wherein the downlink positioning information carries location assistance information used for positioning measurement;
a first processing unit, used to perform the positioning measurement based on the downlink positioning information, obtaining a positioning measurement result and sending the positioning measurement result to the access network node; wherein the positioning measurement result is used to perform position solution processing on the UE;
a third receiving unit, used to receive the location information of the UE sent by the access network node.

An embodiment of the present disclosure provides a positioning processing device, including a memory, a transceiver, and a processor;
the memory is used to store a computer program; the transceiver is used to send and receive data under the control of the processor; the processor is used to read the computer program in the memory and perform the following operations:
receiving a second request message sent by an access network node; wherein the second request message is used to instruct positioning processing of a UE.
Optionally, the processor is used to read the computer program in the memory and perform the following operations:
sending a second response message to the access network node; wherein the second response message is used to indicate sending downlink positioning information to a UE, and the downlink positioning information carries location assistance information for positioning measurement;
receiving a positioning measurement result of the UE sent by the access network node;
performing position solution processing on the UE based on the positioning measurement result, obtaining the location information of the UE and sending the location information of the UE to the access network node.

An embodiment of the present disclosure provides a positioning processing device, including:
a first receiving unit, used to receive a second request message sent by an access network node; wherein the second request message is used to instruct to perform positioning processing on the UE.

An embodiment of the present disclosure provides a processor-readable storage medium, storing a computer program thereon, wherein the computer program causes the processor to execute the steps of the positioning processing method at the access network nod side, or the computer program causes the processor to execute the steps of the positioning processing method at the GMLC side, or the computer program causes the processor to execute the steps of the positioning processing method at the UE side, or the computer program causes the processor to execute the steps of the positioning processing method at the LMF entity side.

The beneficial effect of the technical solution in the present disclosure are as follows.

In an embodiment of the present disclosure, the access network node performs LMF entity selection or reselection based on the first request message, and the access network node sends a second request message to the target LMF entity selected or reselected by the LMF entity, requesting the target LMF entity to perform positioning processing on the UE, that is, the positioning processing process is implemented based on direct access between a node in the access network node and a network element in the core network, thereby realizing positioning processing under the RAN service-oriented architecture.

### BRIEF DESCRIPTION OF THE DRAWINGS

FIG. 1 is a schematic diagram showing a 5G system network architecture;
FIG. 2 is a schematic diagram of a RAN service-oriented architecture according to an embodiment of the present disclosure;
FIG. 3 is a flowchart showing a positioning processing method on an access network node side according to an embodiment of the present disclosure;
FIG. 4 is a flow chart showing a positioning processing method on GMLC side according to an embodiment of the present disclosure;
FIG. 5 is a flowchart showing a positioning processing method on a UE side according to an embodiment of the present disclosure;
FIG. 6 is a flowchart showing a positioning processing method on an LMF side according to an embodiment of the present disclosure;
FIG. 7 shows a first schematic diagram of MT-LR process according to an embodiment of the present disclosure;
FIG. 8 shows a second schematic diagram of MT-LR process according to an embodiment of the present disclosure;
FIG. 9 is a schematic diagram of a MO-LR process according to an embodiment of the present disclosure;
FIG. 10 is a schematic diagram showing a deferred MT-LR process according to an embodiment of the present disclosure;
FIG. 11 is a schematic diagram showing an AF entity or an external client canceling a request according to an embodiment of the present disclosure;
FIG. 12 is a schematic diagram showing a LMF entity reselection process according to an embodiment of the present disclosure;
FIG. 13 is a schematic diagram showing a UE positioning process performed by an LMF entity according to an embodiment of the present disclosure;
FIG. 14 shows a first block diagram of a positioning processing device at an access network node side according to an embodiment of the present disclosure;
FIG. 15 shows a second block diagram of a positioning processing device at an access network node side according to an embodiment of the present disclosure;
FIG. 16 shows a first block diagram of a positioning processing device on a GMLC side according to an embodiment of the present disclosure;
FIG. 17 shows a second block diagram of a positioning processing device on a GMLC side according to an embodiment of the present disclosure;
FIG. 18 shows a first block diagram of a positioning processing device on a UE side according to an embodiment of the present disclosure;
FIG. 19 shows a second block diagram of a positioning processing device on the UE side according to an embodiment of the present disclosure;
FIG. 20 is a first block diagram of a positioning processing device on an LMF side according to an embodiment of the present disclosure; and
FIG. 21 shows a second block diagram of a positioning processing device on an LMF side according to an embodiment of the present disclosure.

### DETAILED DESCRIPTION

In order to make the technical problems, technical solutions and advantages to be solved by the present disclosure clearer, the following will be described in detail with reference to the accompanying drawings and specific embodiments. In the following description, specific details such as specific configurations and components are provided only to help fully understand the embodiments of the present disclosure. Therefore, it is to be clear to those skilled in the art that various changes and modifications can be made to the embodiments described herein without departing from the scope and spirit of the present disclosure. In addition, for clarity and brevity, the description of known functions and structures is omitted.

It is to be understand that "one embodiment" or "an embodiment" throughout the specification mean that specific features, structures, or characteristics associated with the embodiment are included in at least one embodiment of the present disclosure. Therefore, "in one embodiment" or "in an embodiment" appearing throughout the specification do not necessarily refer to the same embodiment. In addition, these specific features, structures, or characteristics may be combined in any suitable manner in one or more embodiments.

In various embodiments of the present disclosure, it is to be understood that the sequence numbers of the following processes do not imply the order of execution, and the order of execution of each process should be determined by its function and internal logic, and should not constitute any limitation on the implementation process of the embodiments of the present disclosure.

Additionally, the terms "system" and "network" are often used interchangeably herein.

The technical solutions provided by the embodiments of the present disclosure can be applicable to a variety of systems, especially 5G systems. For example, the applicable systems may be the global system of mobile communication (GSM) system, the code division multiple access (CDMA) system, the wideband code division multiple access (WCDMA) general packet radio service (GPRS) system, the long term evolution (LTE) system, the LTE frequency division duplex (FDD) system, the LTE time division duplex (TDD) system, the long term evolution advanced (LTE-A) system, the universal mobile telecommunication system (UMTS), the worldwide interoperability for microwave access (WiMAX) system, the 5G new radio (NR) system, etc. These various systems include a UE and a network device. The system may also include a core network part, such as an evolved packet system (EPS), a 5G system (5GS), etc.

Network devices and UEs can each use one or more antennas for multiple input multiple output (MIMO) transmission. MIMO transmission can be single user MIMO (SU-MIMO) or multi-user MIMO (MU-MIMO). Depending on the form and number of antenna combinations, MIMO transmission can be two-dimensional MIMO (2D-MIMO), three-dimensional MIMO (3D-MIMO), full-dimensional MIMO (FD-MIMO) or massive MIMO, or it can be diversity transmission, precoded transmission or beam forming transmission, etc.

In an embodiment of the present disclosure, the term "and/or" describes the association relationship of associated objects, indicating that three relationships may exist. For example, A and/or B may represent three situations: A exists alone, A and B exist at the same time, and B exists alone. The character "/" generally indicates that the associated objects before and after are in an "or" relationship.

The term "a plurality of" in the present disclosure refers to two or more than two, and other quantifiers are similar thereto.

The technical solutions in the embodiments of the present disclosure will be clearly and completely described below with reference to the accompanying drawings in the embodiments of the present application. Obviously, the described embodiments are only some embodiments of the present application, rather than all embodiments. Based on the embodiments in the present application, all other embodiments obtained by those of ordinary skill in the art without creative efforts fall within the scope of protection of the present application.

The following is an introduction to the related technologies involved in the present disclosure.

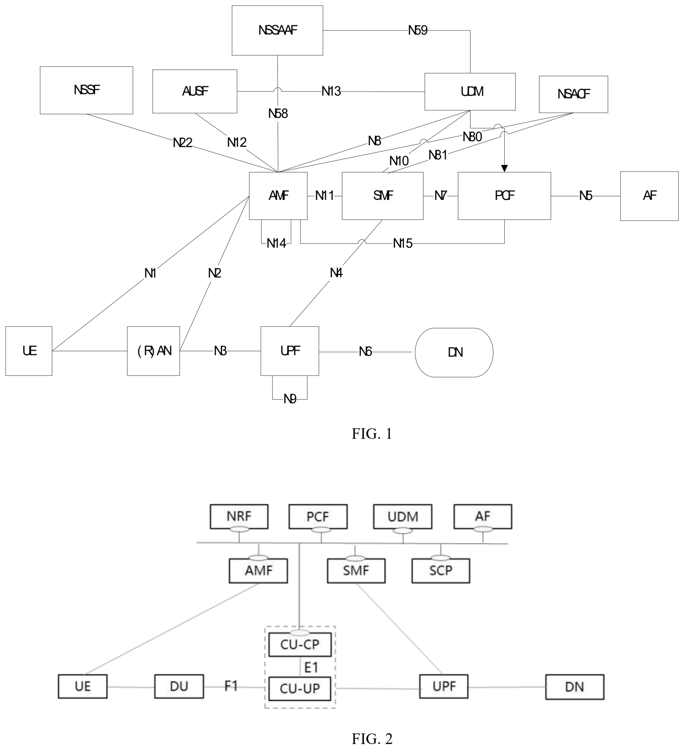

As shown in FIG. 1, the network architecture diagram of the 5G system is provided, that is, the RAN node and the NF entity on the core network side perform transparent transmission of information through the AMF entity.

In order to meet the requirements of 5G diversified services for network agility, flexibility and scalability, virtual and cloud networks are an inevitable trend, and cloud radio access network (Cloud RAN) nodes have also been widely favored. Cloud RAN helps operators build low-cost, high-resource utilization, green, and fully automated wireless networks. It includes two core features: a universal hardware platform (including accelerators) and cloud-native technologies, laying the foundation for the successful deployment of Cloud RAN.

The 5G core network considers adopting a service-oriented architecture as the network infrastructure, and has made in-depth optimizations based on the separation of the control plane and the user plane. The 5G core network control plane is modularly decomposed into different network functions. The decoupled network functions can be independently expanded, independently evolved, and deployed on demand. Each network function has multiple network function services, which enables on-demand customization of core network functions and flexibly supports different service scenarios and requirements. The research on service-oriented architecture mainly focuses on the core network control plane, and the research on service-oriented RAN is still in its early stages.

The 6th Generation Mobile Communication Technology (6G) wireless network will not only be Cloud RAN, but also service-oriented RAN. Cloud RAN has built a flexible and scalable platform for future wireless networks, but its service capabilities are still relatively limited: from a functional perspective, the minimum granularity of the baseband unit (BBU) development is a centralized unit (CU) or a distributed unit (DU), which is relatively large and still cannot meet the needs of rapid launch and flexible deployment of specific new functions; from an interface perspective, point-to-point dedicated interfaces are still used for interconnection within base stations, between base stations, and between base stations and core networks. Whenever the network functions of base stations or related core network sides change, adjustments need to be made on the related interfaces, which requires a large workload for standardization and high complexity of operation and maintenance management. In order to agilely respond to more diverse service function requirements, service quality (QoS) requirements, management policy requirements, deployment requirements, and open requirements in the future, and make the network more forward compatible, the next-generation wireless access network needs to work from the perspective of service capabilities, reconstruct the wireless network into a service-oriented RAN with finer functions, and better leverage the platform advantages of Cloud RAN.

Taking into account the maturity of the industry, the maturity of the technology and other aspects, the development of service-oriented RAN may include the following five levels, which may appear separately or simultaneously. The first level: service-oriented control plane interface to achieve direct cross-domain function access; the second level: service-oriented RAN control plane to facilitate optimizing of the end-to-end process; the third level: service-oriented RAN user plane to create the ultimate cross-layer transmission experience; the fourth level: RAN service-oriented upgrade, deep integration of DOICT new elements; the fifth level: stimulating UE service-oriented capabilities and achieving UE and network service capability sharing. As shown in FIG. 2, a schematic diagram of the RAN service-oriented architecture is provided. RAN and core network elements (such as GMLC, LMF, etc.) can directly access each other through service-oriented interfaces without the need for AMF to perform transmit transmission of information.

The embodiments of the present disclosure provide a positioning method and device to solve the problem that there is no solution of how to implement positioning processing under RAN service-oriented. The method and the device are based on the same application concept. Since the principles of solving the problem by the method and the device are similar, the implementation of the device and the method can refer to each other, and the repeated parts will not be repeated.

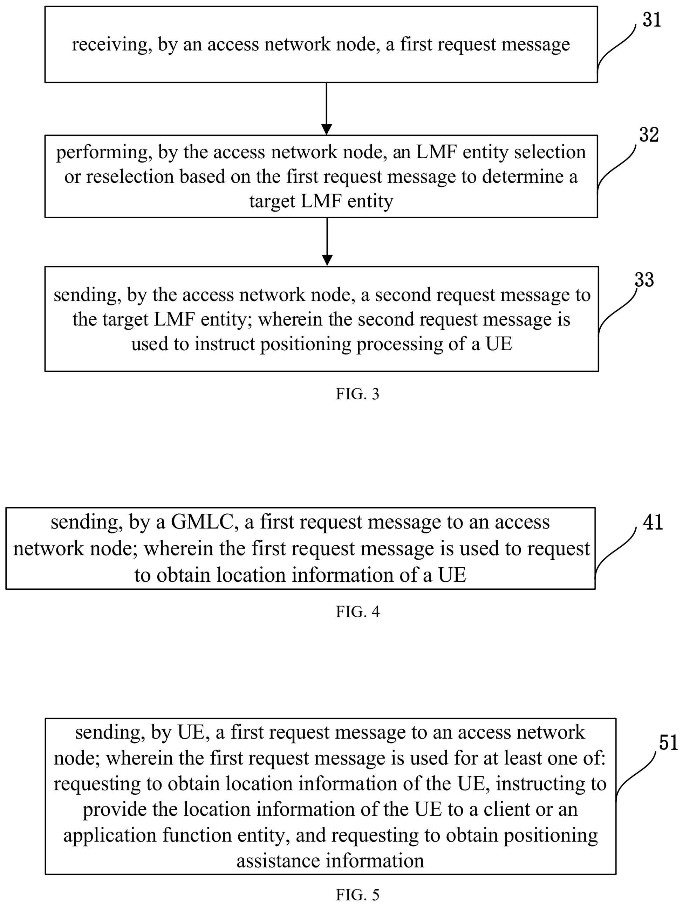

As shown in FIG. 3, an embodiment of the present disclosure provides a positioning method, which specifically includes the following steps.

Step 31: receiving, by an access network node, a first request message.

Optionally, the first request message may be sent by GMLC (or other newly added core network elements, etc.) or by a UE. Specifically, the step 13 may include: receiving, by the access network node, the first request message sent by the GMLC (or other newly added core network elements, etc.); where the first request message is used to request to obtain location information of the UE; or, receiving, by the access network node, the first request message sent by the UE; wherein the first request message is used for at least one of the following: requesting to obtain the location information of the UE, indicating providing the location information of the UE to a client or an application function entity, and requesting to obtain location assistance information.

Optionally, the location assistance information may be data related to the UE (such as in a DL-TDOA scenario) or data not related to the UE (such as in a UL-AOA scenario).

For example, an external client or an application function (AF) entity requests to obtain the location information of the UE, and can send a request message to the GMLC (or other newly added core network elements, etc.), and the GMLC (or other newly added core network elements, etc.) sends a request message to the access network node to indicate that the external client or AF entity requests to obtain the location information of the UE. Correspondingly, the UE can also request the access network node to provide the location of the UE to the external client or AF entity, etc. In addition, the UE (if the UE itself does not have the positioning solution capability) can also request the access network node to provide the location information of the UE, etc., or the UE can also request the access network node to provide location assistance information for positioning measurement, etc., which are limited thereto in the embodiments of the present disclosure.

Step 32: performing, by the access network node, a location management function (LMF) entity selection or reselection based on the first request message to determine a target LMF entity;

Optionally, the access network node performs the LMF entity selection based on the first request message sent by the UE or GMLC (or other newly added core network elements, etc.), for example, the access network node can perform LMF entity selection based on available information or based on the local configuration of the access network node, etc., and the network repository function (NRF) entity, etc. can be used in the selection process. Alternatively, the access network node can also perform LMF entity reselection based on the first request message sent by the UE or GMLC, for example, when the access network node evaluates and determines that the current first LMF entity is not suitable or cannot perform location in the current access network or a servicing cell of the UE based on the operator configuration and policy, etc., a more suitable second LMF entity can be reselected, for instance, the access network node can select a new LMF (i.e., a second LMF entity) for the UE based on an LMF service area (including one or more tracking areas (TA)).

Step 33: sending, by the access network node, a second request message to the target LMF entity; where the second request message is used to indicate positioning processing of the UE.

For example, after the access network node determines the target LMF entity by performing LMF entity selection or reselection, the access network node sends a second request message to the target LMF entity for requesting the target LMF entity to perform UE positioning. Specifically, the UE can provide positioning measurement related information to the target LMF entity, and the target LMF entity performs position calculation. Or, for UEs with position calculation capabilities, the target LMF entity can provide location assistance information, and the UE performs positioning measurement and position calculation, etc., which are not limited thereto in the embodiments of the present disclosure.

In the above scheme, the access network node performs LMF entity selection or reselection based on the first request message, and the access network node sends a second request message to the target LMF entity selected or reselected by the LMF entity for requesting the target LMF entity to perform positioning processing on the UE, that is, the positioning processing process is implemented based on direct access between the access network node and the core network element, thereby realizing positioning processing under the RAN service-oriented architecture.

Optionally, the first request message sent by the GMLC carries at least one of:
SUPI information of the UE;
type information of a client requesting the location information of the UE;
a quality of service (QoS) of the UE;
a geographical area description (GAD) graphics supported by the UE;
first indication information used to indicate a service type for requesting the location information of the UE; for example, the first indication information may be identifier information of the service type or other implicit indication methods;
a predefined positioning time of the requested location information of the UE; for example, the predefined positioning time is used to indicate to request to obtain the location information of the UE at a specific time in the future;
second indication information used to indicate that the UE needs to be notified to provide the location information and/or the UE needs to be notified to perform privacy verification; for example, the second indication information can explicitly or implicitly indicate that the UE needs to be notified to provide location information and/or needs to be notified to perform privacy verification;
third indication information used to indicate a type of postponing transmisson of the location information of the UE; for example: the type of postponing the transmisson of the location information of the UE may include but is not limited to at least one of: periodically transmitting the location information of the UE; transmitting the location information of the UE when a trigger condition is met, etc.; GMLC address information; for example, carrying the GMLC address information to notify the access network node to learn the corresponding GMLC for subsequent interaction;
identifier information of LDR; for example, the identifier information may be an LDR index, which is used to identify a positioning session. For example, an identifier is required for each positioning session initiated. A UE may be positioned multiple times, and an LDR index may be allocated for each positioning to identify the current positioning session.

Optionally, after the receiving, by the access network node, the first request message sent by the GMLC, the positioning processing method further includes:
sending, by the access network node, a notification message to the UE based on the second indication information; where the notification message is used to notify the UE to provide the location information and/or request a privacy verification;
receiving, by the access network node, a notification response message sent by the UE; where the notification response message carries fourth indication information used to indicate whether to allow providing the location information and/or a result of the privacy verification;
in the case where the fourth indication information is used to indicate allowing to providing the location information and/or the result of the privacy verification is authorized, performing, by the access network node, LMF entity selectiion or reselection.

Specifically, in the scenario where an external client or an AF entity requests to obtain the location information of the UE, the GMLC sends a first request message for obtaining the location information of the UE to the access network node. In the scenario where the UE needs to be notified to provide location information and/or needs to be notified to perform privacy verification, the first request message carries second indication information for indicating that the UE needs to be notified to provide location information and/or needs to be notified to perform privacy verification. In this way, in the case where the first request message carries the second indication information, the access network node notifies the UE that the UE needs to provide the location information of the UE to the external client or the AF entity and/or the UE needs to perform privacy verification based on the second indication information. For example, if the UE supports LCS notification (depending on UE capability information), a notification message is sent to the UE for indicating an external client identifier (if supported and available), a service type (if supported and available), and whether privacy verification needs to be performed; if the UE needs to perform the privacy verification, verification processing can be performed (such as notifying a user and waiting for user authorization, etc.), and a notification response message is returned to the RAN to notify the access network node to allow or reject the current positioning request (indicating whether the location information is allowed to be provided and/or whether the verification is passed, etc.).

Optionally, the positioning processing method further includes:
in a case where the access network node does not receive the notification response message, or the fourth indication information is used to indicate not allowing to provide the location information and/or a result of the privacy verification of not authorized, sending, by the access network node, fifth indication information used to instruct the UE to rejectreject to provide the location information to the GMLC.

For example, if the access network node does not receive a notification response message from the UE within a predetermined time period, that is, the access network node deduces that there is no reply, or if the access network node receives a notification response message indicating that the result of the privacy verification is a rejection of authorization, the access network node returns an error response (that is, the fifth indication information) to the GMLC for instruct the UE to reject to provide location information, that is, the UE blocks the location request.

Optionally, the notification response message further carries at least one of:
privacy setting information, used to instruct the UE to allow or reject to continue to provide the location information; for example, the privacy setting information may indicate whether the UE allows subsequent location requests (i.e., location requests that occur in the future).
time information, used to instruct the UE to reject to continue to provide the location information before a target time and/or to reject to continue to provide the location information within a target duration; for example, the time information can be used to indicate the time when the UE rejects subsequent positioning requests (that is, positioning requests that occur in the future). The time can be a specific moment (such as 10:00), that is, the UE will reject the positioning request (that is, reject to continue to provide location information) before 10:00; or the time information can be a specific duration (such as 30 minutes), that is, within 30 minutes after the current moment, the UE rejects the positioning request (that is, reject to continue to provide location information).

Optionally, after the receiving, by the access network node, the first request message sent by the GMLC, the positioning processing method further includes:
sending, by the access network node, a first response message to the GMLC based on the third indication information; where the first response message is used to indicate confirmation of postponing transmission of the location information of the UE;
after the sending, by the access network node, the second request message to the target LMF entity, the positioning processing method further includes:
   receiving, by the access network node, the location information of the UE;
   sending, by the access network node, the location information of the UE to the GMLC according to a type of postponing transmission of the location information of the UE supported by the access network node.

Specifically, in the scenario where an external client or an AF entity requests to obtain the location information of the UE, the GMLC sends a first request message for obtaining the location information of the UE to the access network node. In the scenario where the transmission of the location information of the UE needs to be postponed, the first request message carries third indication information for indicating the type of postponing transmission of the location information of the UE, where the type of postponing transmission of the location information of the UE includes but is not limited to at least one of the following : periodically transmitting the location information of the UE; transmitting the location information of the UE when a trigger condition is met. The access network node determines the type of postponing transmission of the location information of the UE based on the third indication information. If the access network node supports periodic transmission of the location information of the UE, the first response message sent to the GMLC can be used to notify the external client or the AF entity of the type of transmission of the location information of the UE that the access network node supports, and further, the access network node will provide the location information of the UE to the external client or AF entity through the GMLC in accordance with the type of sending of the location information of the UE (such as periodically transmitting the location information of the UE).

It is to be noted that the above embodiment of postponing transmission of location information of the UE can be applied to the above scenario where there is no need to notify the UE to provide location information and/or there is no need to notify the UE to perform privacy verification, and can also be applied to the above scenario where the UE needs to be notified to provide location information and/or the UE needs to be notified to perform privacy verification, etc. The embodiments of the present disclosure are not limited to this.

Optionally, in the scenario where the UE requests to obtain the location information of the UE, or requests to provide the location information of the UE to an external client or AF entity, the UE may send a first request message to the access network node to obtain the location information of the UE. In the scenario where the location information of the UE needs to be postponed to be sent, the first request message carries third indication information for indicating the type of postponing transmission of the location information of the UE, where the type of postponing transmission of the location information of the UE includes but is not limited to at least one of the following: periodically transmitting the location information of the UE; transmitting the location information of the UE when a trigger condition is met. The access network node determines the type of postponing transmission of the location information of the UE supported by the access network device according to the third indication information. If the access network node supports conditional triggering of transmitting the location information of the UE, the UE may be notified through a first response message of the type of location information sent by the access network node, and further, the access network node will provide the UE with its location information according to the type of transmitting the location information of the UE (such as conditional triggering of transmitting the location information of the UE), or provide the location information of the UE to an external client or AF entity, etc.

Optionally, after the receiving, by the access network node, the first request message sent by the GMLC, the positioning processing method further includes:
in the case where the UE is in an idle state of connection management (CM IDLE), sending, by the access network node, a third request message to the UE; where the third request message is used to request to establish a signaling connection to the UE;
receiving, by the access network node, a third response message sent by the UE;
in a case where the third response message indicates that the signaling connection is successful, performing, by the access network node, LMF entity selection or reselection.

Optionally, after the receiving, by the access network node, the third response message sent by the UE, the positioning process method further includes:
in a case where the third response message indicates that the signaling connection fails, sending, by the access network node, a most recently obtained location information of the UE to the GMLC.

Specifically, if the UE is in the idle state of the communication management (CM), the access network node can initiate a network-triggered service request process to establish a signaling connection to the UE. If the signaling connection is successfully established, the access network node can perform the LMF entity selection or reselection process. If the signaling connection fails to be established, the access network node can directly reply to the GMLC with the most recent location information of the UE it knows, such as the location information including but not limited to: identifier information of a cell, time information corresponding to the location information of the UE, etc.

Optionally, after the receiving, by the access network node, the first request message sent by the GMLC, the positioning processing further includes:
receiving, by the access network node, a cancellation request message sent by the GMLC;
sending, by the access network node, sixth indication information for indicating cancellation of obtaining the location information of the UE to the target LMF entity and the UE respectively based on the cancellation request message.

Specifically, in the scenario where an external client or AF entity requests to obtain the location information of the UE, the GMLC sends a first request message for obtaining the location information of the UE to the access network node to request to obtain the location information of the UE. Furthermore, the external client or AF entity can also request to cancel obtaining the location information of the UE, such as the GMLC sending a cancellation request message that the external client or AF entity requests to cancel obtaining the location information of the UE to the access network node, and the access network node sends a confirmation indication (i.e., the sixth indication information) to the GMLC, that is, no longer providing the location information of the UE to the external client or AF entity.

Optionally, the first request message sent by the UE carries at least one of:
seventh indication information used to instruct transmitting a request message to the LMF entity; for example, the first request message may carry an LM identifier to indicate that the request message is a request message sent to the LMF entity.
QoS of the UE;
a maximum validity time for requesting the location information of the UE;
eighth indication information used to indicate a type of the requested location information of the UE;
a predefined positioning time of the requested location information of the UE;
identifier information of the client; for example, in a scenario where a UE requests to provide location information to an external client, the identifier information of the client is used by the access network node to obtain the client that receives the location information of the UE;
identifier information of an application function entity; for example, in a scenario where a UE requests the AF entity to provide location information, the identifier information of the AF entity is used by the access network node to obtain the AF entity that receives the location information of the UE;
address information of the GMLC that sends location information to the client or the application function entity; for example, in the scenario where the UE requests to provide location information to an external client or AF entity, the address information of the GMLC is used by the access network node to obtain the GMLC that sends the location information of the UE to the external client or AF entity;
ninth indication information used to indicate a service type of requesting or providing the location information of the UE;
tenth indication information for instructing to assign a pseudonym;
eleventh indication information used to indicate a type of location assistance information;
twelfth indication information used to indicate an application scenario of the location assistance information.

Optionally, the first request message sent by the UE is an RRC message. For example, the UE may carry at least one of the above information through an RRC message, such as carrying an LM identifier in the RRC message to indicate that the request message is sent to an LMF entity. Optionally, for a positioning request initiated by the UE, the RRC message may also carry identifier information of the LMF entity to indicate the LMF entity that currently provides a service. At this time, the access network node may decide whether to reselect a new LMF entity for the LMF entity.

Optionally, after the sending, by the access network node, the second request message to the target LMF entity, the positioning processing method further includes:
receiving, by the access network node, the location information of the UE sent by the target LMF entity;
sending, by the access network node, the location information to the UE; where the location information is carried in an RRC message, and the RRC message further carries at least one of:
   a timestamp of the location information;
   thirteenth indication information used to indicate whether the location information meets an accuracy requirement;
   fourteenth indication information used to indicate whether the location information is successfully provided to the client or the application function entity; for example, for a scenario where the UE requests to provide location information to the AF entity, after the access network node sends the location information of the UE to the external client or AF entity through GMLC, the access network node can provide feedback to the UE whether the location information is successfully provided to the client or the application function entity. The fifteenth indication information is used to indicate whether the client or the application function entity successfully processes the location information; for example, for a scenario where the UE requests to provide location information to the AF entity, after the access network node sends the location information of the UE to the external client or AF entity through GMLC, when the external client or AF entity successfully sends the location information of the UE and the location information of the UE is successfully received, whether the location information is successfully processed can be fed back and notified to the UE;
   sixteenth indication information used to indicate a reason why the client or the application function entity fails to process the location information. For example, for the scenario where the UE requests to provide location information to the AF entity, after the access network node sends the location information of the UE to the external client or AF entity through GMLC, the external client or AF entity successfully receives the location information of the UE after sending the location information of the UE, but fails to successfully process the location information, the reason why the location information is not successfully processed can be further fed back and notified to the UE.

Optionally, when the access network node performs LMF entity reselection and determines a new LMF entity (i.e., the target LMF entity determined based on the LMF entity reselection), the RRC message sent by the access network node to the UE may also carry identifier information of the new LMF entity to indicate the changed LMF entity.

Optionally, the second request message carries at least one of:
identifier information associated with a location service (LCS);
identifier information of the access network node; for example, the identifier information may be a base station identifier (gNB ID) or a cell global identifier (CGI), etc.;
identifier information of a serving cell;
fifteenth indication information used to indicate a type of the client requesting to obtain the location information of the UE;
sixteenth indication information used to indicate a positioning protocol supported by the UE;
QoS of the UE;
positioning capability information of the UE;
GAD graphics supported by the UE;
seventeenth indication information used to indicate a service type of requesting or providing the location information of the UE;
eighteenth indication information used to indicate requesting the location information or location assistance information of the UE;
a list of subscribed location assistance information;
a predefined positioning time of the requested location information of the UE;
nineteenth indication information used to indicate a type of the location assistance information.

Optionally, after the sending, by the access network node, the second request message to the target LMF entity, the positioning processing method further includes:
receiving, by the access network node, a second response message sent by the target LMF entity;
sending, by the access network node, downlink positioning information to the UE based on the second response message; where the downlink positioning information carries location assistance information used for positioning measurement;
receiving, by the access network node, a positioning measurement result sent by the UE, and sending the positioning measurement result to the target LMF entity;
receiving, by the access network node, the location information of the UE sent by the target LMF entity based on the positioning measurement result, and sending the location information to the UE or GMLC.

Specifically, after receiving the second response message, the LMF entity sends a second response message to the access network node for requesting to transmit downlink positioning information to the UE, carrying LCS-associated identifier information (such as the session ID parameter can be set to the LCS-associated identifier information). Optionally, the downlink positioning information can request to obtain the location information of the UE, provide location assistance information to the UE, or query the UE capability (if the LMF has not received the UE positioning capability from the RAN), etc. The access network node can forward the downlink positioning information to the UE in a DL RRC NAS transmission message, which carries LCS-associated identifier information, such as setting the routing identifier information to the LCS-associated identifier information. The UE side receives the downlink positioning information and stores the location assistance information therein, and performs any positioning measurement and/or position calculation requested by the downlink positioning message (such as the UE has positioning solution capability). The UE feeds back the obtained positioning related information (such as positioning measurement results, which are calculated by the LMF entity for the UE position; or the location information obtained by the UE performing the position calculation, which is provided by the access network node to the corresponding external client or AF entity, etc.) or feeds back the corresponding capability information to the access network node by including the uplink positioning information in the RRC UL NAS transport message. The uplink positioning information also includes routing identifier information, that is, indicating the LMF entity of the service.

In the above scheme of the present disclosure, the service-oriented operation between the RAN node and the NF entity, that is, the signaling transmission is directly carried out between the NF entity and the RAN node. For example, the service-oriented operation between the GMLC and the RAN node, and the RAN node and the LMF entity is used to transmit the positioning message, thereby realizing the positioning processing under the RAN service-oriented architecture, which is conducive to reducing the signaling overhead and reducing the transmission delay. And the RAN entity can select or reselect the LMF entity according to the relevant information to complete the transmission and positioning process of the positioning message, and add a new message type or message in the RRC signaling, so that the RAN node can send the signaling message directly to the corresponding UE. For example, the message type: LM is added to the RRC signaling to indicate that the RAN node sends the positioning request message to the LMF entity; the identifier: LMF1 is added to the RRC signaling to indicate the previously served LMF entity. New uplink and downlink positioning information is added to the RRC signaling for the transmission of positioning messages and security and privacy verification between the UE and the RAN node, which simplifies the signaling process compared to the existing positioning process, thereby reducing the signaling overhead and reducing the transmission delay.

The access network node involved in the embodiments of the present disclosure may be referred to as a base station, which may include multiple cells that provide services to UEs. Depending on the specific application scenario, the access network node may also be a device in the access network that communicates with a wireless UE device through one or more sectors on the air interface, or another name. The access network node may be used to interchange received air frames with Internet Protocol (IP) packets, and serve as a router between the wireless UE device and the rest of the access network, where the rest of the access network may include an Internet Protocol (IP) communication network. The access network node may also coordinate the attribute management of the air interface. For example, the access network node involved in the embodiments of the present disclosure may be an access network node (Base Transceiver Station, BTS) in the Global System for Mobile communications (Global System for Mobile communications, GSM) or Code Division Multiple Access (CDMA), or an access network node (NodeB) in Wide-band Code Division Multiple Access (WCDMA), or an evolutionary access network node (eNB or e-NodeB) in the long term evolution (LTE) system, a 5G base station (gNB) in the 5G network architecture (next generation system), or a home evolved Node B (HeNB), a relay node, a home base station (femto), a pico base station (pico), etc., which is not limited in the embodiments of the present disclosure. In some network structures, the access network node may include a centralized unit (CU) node and a distributed unit (DU) node, and the centralized unit and the distributed unit may also be arranged geographically separately.

As shown in FIG. 4, one embodiment of the present disclosure provides a positioning processing method, including the following steps:
Step 41: sending, by a GMLC, a first request message to an access network node; where the first request message is used to request to obtain location information of a UE.

For example, if an external client or AF entity needs to obtain the location information of a UE, a request message may be sent to the GMLC, and the GMLC sends a first request message to the access network node to indicate that the external client or AF entity requests to obtain the location information of the UE.

Optionally, the first request message carries at least one of the following information:
SUPI information of the UE;
type information of a client requesting the location information of the UE;
QoS of the UE;
a GAD graphics supported by the UE;
first indication information used to indicate a service type for requesting the location information of the UE;
a predefined positioning time of the requested location information of the UE;
second indication information used to indicate that the UE needs to be notified to provide the location information and/or the UE needs to be notified to perform privacy verification;
third indication information used to indicate a type of postponing transmission of the location information of the UE;
address information of the GMLC;
identifier information of an LDR.

Optionally, after the sending, by the GMLC, the first request message to the access network node, the positioning processing method further includes:
receiving, by the GMLC, a first response message sent by the access network node; where the first response message is used to indicate confirmation of postponing transmission of the location information of the UE;
receiving, by the GMLC, the location information of the UE sent by the access network node based on a type of postponing transmission of the location information of the UE supported by the access network node.

Optionally, the type of postponing transmission of the location information of the UE includes at least one of:
periodically transmitting the location information of the UE;
sending the location information of the UE when a trigger condition is met.

Optionally, after the sending, by the GMLC the first request message to the access network node, the positioning processing method further includes:
sending, by the GMLC, a cancellation request message to the access network node; where the cancellation request message is used to indicate cancellation of obtaining the location information of the UE.

It is to be noted that the positioning processing method on the GMLC side in the embodiment of the present disclosure corresponds to the positioning processing method on the access network node side mentioned above, and their embodiments can refer to each other, they will not be described again here to avoid repetition.

As shown in FIG. 5, one embodiment of the present disclosure provides a positioning processing method, including the following steps:
Step 51: sending, by a UE, a first request message to an access network node; where the first request message is used for at least one of: requesting to obtain location information of the UE, instructing to provide the location information of the UE to a client or an application function entity, and requesting to obtain location assistance information.

For example, when the UE itself does not have the positioning and solving capabilities, or when the UE has the positioning and solving capabilities and needs to provide its location information externally, the UE can actively request the access network node to assist in providing its location information; or, the UE can also actively request the access network node to assist in providing its location information to an external client or AF entity, etc.; or, the UE actively requests the access network node to assist in obtaining location assistance information, perform positioning measurement and position solving processing, or perform positioning measurement and then assist in positioning solving processing with the assistance of the LMF entity, etc. The embodiments of the present disclosure are not limited to this.

Optionally, the first request message carries at least one of the following information:
seventh indication information used to instruct sending a request message to the LMF entity;
QoS of the UE;
a maximum validity time for requesting the location information of the UE;
eighth indication information used to indicate the type of the requested location information of the UE;
a predefined positioning time of the requested location information of the UE;
identifier information of a client;
identifier information of an application function entity;
address information of the GMLC that sends location information to the client or the application function entity;
ninth indication information used to indicate a service type of requesting or providing the location information of the UE;
tenth indication information for instructing to assign a pseudonym;
eleventh indication information used to indicate a type of location assistance information;
twelfth indication information used to indicate an application scenario of the location assistance information.

Optionally, the first request message sent by the UE is an RRC message.

Optionally, after the sending, by the UE, the first request message to the access network node, the positioning processing method further includes:
receiving, by the UE, the location information of the UE sent by the access network node; where the location information is carried in an RRC message, and the RRC message further carries at least one of:
a timestamp of the location information;
thirteenth indication information used to indicate whether the location information meets an accuracy requirement;
fourteenth indication information used to indicate whether the location information is successfully provided to the client or the application function entity;
fifteenth indication information used to indicate whether the client or the application function entity successfully processes the location information;
sixteenth indication information is used to indicate a reason why the client or the application function entity fails to process the location information.

Optionally, after the sending, by the UE, the first request message to the access network node, the positioning processing method further includes:
receiving, by the UE, downlink positioning information sent by the access network node; where the downlink positioning information carries location assistance information used for positioning measurement;
performing, by the UE, the positioning measurement based on the downlink positioning information, obtaining a positioning measurement result and sending the positioning measurement result to the access network node; where the positioning measurement result is used to perform position solution processing on the UE;
receiving, by the UE, the location information of the UE sent by the access network node.

It is to be noted that the positioning processing method on the UE side in the embodiment of the present disclosure corresponds to the positioning processing method on the access network node side, and their embodiments can refer to each other, they will not be described here to avoid repetition.

The UE in an embodiment of the present disclosure may be a device that provides voice and/or data connectivity to a user, a handheld device with a wireless connection function, or other processing devices connected to a wireless modem. In different systems, the names of UE devices may also be different. For example, in a 5G system, the UE device may be called a user equipment (UE). A wireless UE device may communicate with one or more core networks (CN) via a radio access network (RAN). The wireless UE device may be a mobile UE device, such as a mobile phone (or a "cellular" phone) and a computer with a mobile UE device. For example, it may be a portable, pocket-sized, handheld, computer-built-in or vehicle-mounted mobile device that exchanges language and/or data with a wireless access network. For example, personal communication service (PCS) phones, cordless phones, session initiation protocol (SIP) phones, wireless local loop (WLL) stations, personal digital assistants (PDAs), and other devices. The wireless UE device may also be referred to as a system, a subscriber unit, a subscriber station, a mobile station, a mobile, a remote station, an access point, a remote UE device, an access UE device, a user UE device, a user agent, and a user device, but is not limited in the embodiments of the present disclosure.

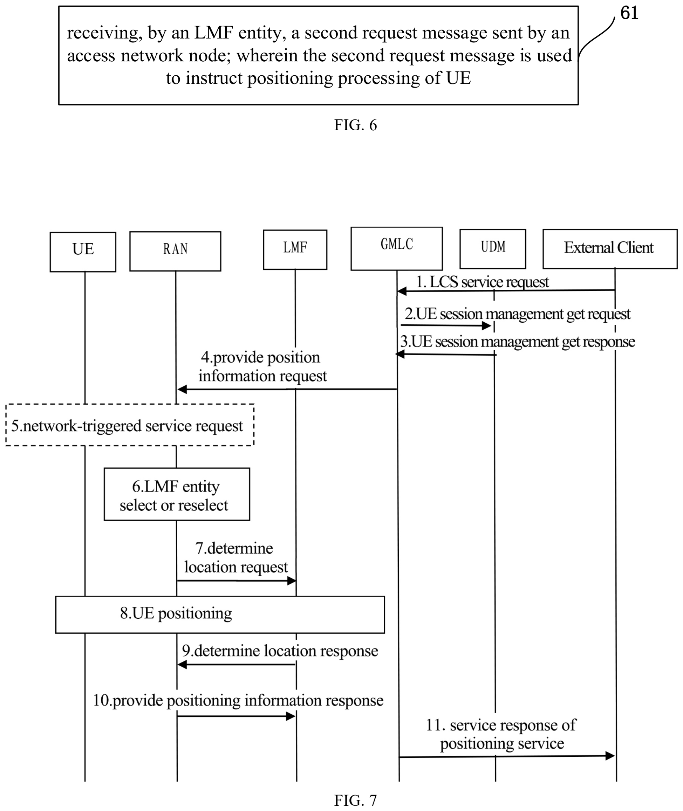

As shown in FIG. 6, one embodiment of the present disclosure provides a positioning processing method, including:
Step 61: receiving, by an LMF entity, a second request message sent by an access network node; where the second request message is used to instruct positioning processing of a UE.

Specifically, the access network node can perform LMF entity selection or reselection according to the first request message sent by the UE or GMLC, and send a second request message to the selected or reselected target LMF entity, and the target LMF entity performs the positioning processing of the UE according to the second request message. The positioning processing may include that the LMF entity provides location assistance information to the UE, the UE performs positioning measurement and position solution processing, or the LMF entity performs UE position solution processing according to the positioning measurement reported by the UE, etc. The embodiments of the present disclosure are not limited to this.

Optionally, after the receiving, by the LMF entity, the second request message sent by the access network node, the positioning processing method further includes:
sending, by the LMF entity, a second response message to the access network node; where the second response message is used to indicate sending downlink positioning information to a UE, and the downlink positioning information carries location assistance information for positioning measurement;
receiving, by the LMF entity, a positioning measurement result of the UE sent by the access network node;
performing, by the LMF entity, position solution processing on the UE based on the positioning measurement result, obtaining the location information of the UE and sending the location information of the UE to the access network node.

Optionally, the second request message carries at least one of the following information:
identifier information associated with an LCS;
identifier information of the access network node;
identifier information of a serving cell;
fifteenth indication information used to indicate a type of the client requesting to obtain the location information of the UE,
sixteenth indication information used to indicate a positioning protocol supported by the UE;
QoS of the UE;
positioning capability information of the UE;
GAD graphics supported by the UE;
seventeenth indication information used to indicate a service type of requesting or providing the location information of the UE;
eighteenth indication information used to indicate requesting the location information or location assistance information of the UE;
a list of subscribed location assistance information;
a predefined positioning time of the requested location information of the UE;
nineteenth indication information used to indicate a type of the location assistance information.

It is to be noted that the positioning processing method on the UE side in the embodiment of the present disclosure corresponds to the positioning processing method on the access network node side mentioned above, and their embodiments can refer to each other, they will not be described again here to avoid repetition.

The above methods of the present disclosure are described below in conjunction with specific scenarios.

### Embodiment 1: a process for supervising MT-LR of positioning services (i.e., any positioning request sent from a positioning client (LCS Client) to an LCS server);

As shown in FIG. 7, a flow chart of the MT-LR process is provided, which specifically includes the following steps.

Step 1: external Client related to the positioning service sends a request (such as an LCS request) to the GMLC, requesting the location of the target UE with a Generic Public Subscription Identifier (GPSI) or SUPI. The request may also include the requested QoS and supported GAD graphics. If the locations of multiple UEs are requested, the following steps need to be repeated. At this time, the GMLC needs to confirm whether the number of target UEs in the LCS request exceeds the maximum number of target UEs that the LCS client can request. If it exceeds, the GMLC rejects the LCS request, Steps 2 to 10 are skipped, and then a suitable error reason is fed back to the external client in step 11.

Step 2: The GMLC calls the UE session management request (Nudm_UECM_Get Request) service operation to the Unified Data Management (UDM) entity of the target UE based on the GPSI or SUPI of the target UE.

Step 3: The UDM entity returns the network address of the current serving RAN node by calling the UE Session Management Get Response (Nudm_UECM_Get Response) service operation.

Step 4: GMLC calls the provide position information (Ngnb_Location_ProvidePositioningInfo) service operation to the RAN node to request the current location of the UE. This service operation includes SUPI, client type, and may also include requested QoS and supported GAD graphics.

Step 5: If the UE is in CM IDLE state, the RAN node initiates a network-triggered service request procedure to establish a signaling connection to the UE.

Step 6: The RAN selects or reselects the LMF entity based on the available information or based on the RAN local configuration and determines the target LMF entity. The Network Repository Function (NRF) entity may be used in the selection or reselection process.

Step 7: The RAN entity calls the determine location (Ngnb_Location_DetermineLocation) service operation to the target LMF entity to request the current location of the UE. This service operation includes LCS association identity information, RAN node identity information (such as gNB ID or CGI, etc.), the serving cell identifier of the primary cell of the primary RAN node in the dual connectivity scenario and the serving cell identifier of the primary cell of the secondary RAN node (if available), the client type, and may also include an indication that the UE supports the LTE Positioning Protocol (LPP), the requested QoS, the UE positioning capability (if available) and the supported GAD graphics.

Step 8: The target LMF entity performs the positioning process, and the process of Example 7 can be referred to. In this step 8, the target LMF entity uses the location message transfer (Ngnb_Communication _LocationMessageTransfer) service operation to request to send a positioning-related message to the UE or to send a network positioning message to the serving NG-RAN node (gNB or NG-eNB) of the UE. The target LMF entity should determine the global position and the optional position in the local coordinate system.

Step 9: The target LMF entity returns a reply message to Ngnb_Location_DetermineLocation to the RAN node, returns the current location of the UE and the UE positioning capability. This service operation includes the LCS association identifier, location information, positioning time and accuracy, and may also include information on the positioning method, as well as the timestamp of the location.

Step 10: The RAN node returns a reply message to Ngnb_Location_ProvidePositioningInfo to the GMLC, returns the current location of the UE. This service operation includes location information, positioning time and accuracy, and may also include information about the positioning method and the timestamp of the location. When the UE positioning capability is received from the target LMF entity, the RAN node stores the same in the UE context.

Step 11: GMLC returns a positioning service response to the external positioning service client.

### Embodiment 2: MT-LR process for commercial positioning service;

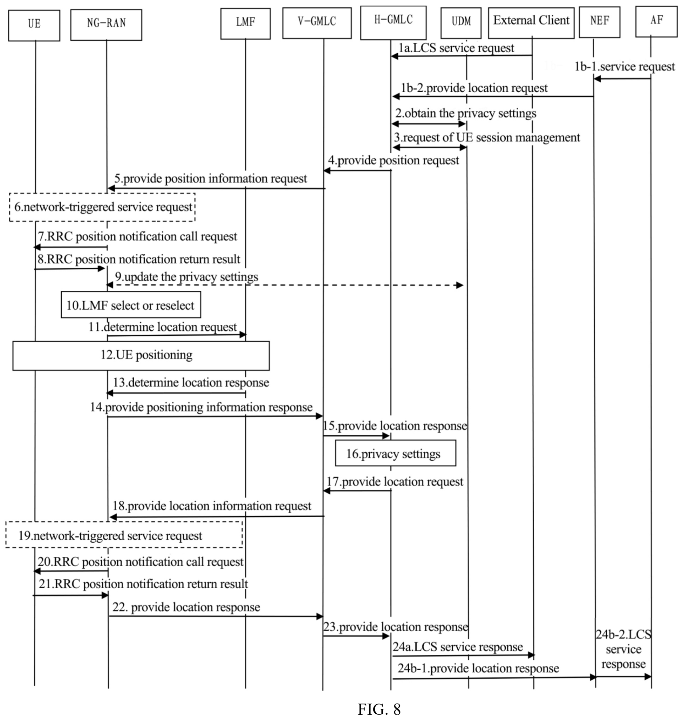

As shown in FIG. 8, another flow chart of the MT-LR process is provided, which specifically includes the following steps.

Step 1: an external client or AF related to the positioning service (such as through the Network Exposure Function (NEF) entity) requests the (H-)GMLC for the location and speed (optional) of the UE identified by the GPSI or SUPI. The request may include the requested QoS, supported GAD graphics and other attributes. The (H-)GMLC (1a) or NEF (1b) authorizes the external client or AF to use the LCS service. If the authorization fails, steps 2 to 22 are skipped, and the (H-)GMLC (1a) or NEF (1b) replies to the external client or AF in step 23 that the service authorization failed. In some scenarios, the (H-)GMLC derives the GPSI or SUPI of the target UE or QoS based on the subscription data or other data provided by the LCS client or AF.

The LCS request may carry a service identifier, codeword and service coverage information. (H-)GMLC determines whether the received service identifier matches the service allowed to be used by the LCS client or AF entity. If it does not match, (H-)GMLC rejects the LCS request. Otherwise, (H-)GMLC maps the received service identifier to the corresponding service type.

The LCS request may include a predetermined positioning time, which indicates the UE location at a specific time in the future.

If the LCS service request includes a pseudonym for the target UE and the (H-)GMLC cannot resolve the PMD address from the pseudonym, the (H-)GMLC determines the GPSI or SUPI of the target UE. If the (H-)GMLC resolves the Pseudonym Mediation Device Functionality (PMD) address from the pseudonym, the (H-)GMLC requests the GPSI or SUPI of the target UE from the PMD. If the (H-)GMLC cannot obtain the GPSI or SUPI of the target UE, the (H-)GMLC shall cancel the positioning request.

If the positioning request does not include a predetermined positioning time, and the message type is "current or most recent location" and the maximum usage time of the requested location information, the (H-)GMLC verifies whether it has stored previously acquired location information of the target UE. If the (H-)GMLC has stored the location information and the timestamp of the location (if available), and the location information meets the requested accuracy and the maximum usage time of the location, the (H-)GMLC checks the result of the privacy check performed in step 2. If the result of the privacy check is "Positioning is allowed and notification is not required", steps 3 to 22 can be skipped.

If the positioning request is for multiple UEs, the following steps are repeated.

Step 1b-1: The AF entity sends an LCS service request to the NEF entity.

Step 1b-2: The NEF entity determines that the QoS in the positioning request is higher than the location accuracy of the cell ID level, then the NEF sends the Nglmc_ProvideLoacation_Request service operation to the (H-)GMLC, and the message includes the LCS client type and the parameters received from the AF entity request. As a deployment option or if a perdetermined positioning time is received, the NEF entity can also call Nglmc_ProvideLocation_Request to the (H-)GMLC for a request with a QoS lower than the cell ID location accuracy. The NEF entity determines the LCS client type based on the LCS client type information of each AF entity that is preconfigured.

If the locations of multiple UEs are requested, the following steps are repeated. For such requests, the (H-)GMLC or NEF entity needs to verify whether the number of target UEs exceeds the maximum number of target UEs that the LCS client can request. If it exceeds, the (H-)GMLC or NEF rejects the LCS request, steps 2 to 14 are skipped, and the error reason is returned to the client in step 15.

It should be noted that: if the requested location accuracy in the location request is at or below the cell identity level, the NEF entity may call the event triggered subscription (Namf_EventExposure_Subscribe) service operation to subscribe the location event report to the RAN node for the target UE.

Step 2: (H-)GMLC calls Nudm_SDM_Get service operation to the UDM entity of the target UE to obtain the privacy settings of the UE identified by GPSI or SUPI. The UDM entity returns the privacy settings of the UE. (H-)GMLC checks the privacy settings. If the target UE does not allow positioning, steps 3 to 22 are skipped.

Step 3: (H-)GMLC calls Nudm_UECM_Get service operation to the UDM entity of the target UE, and the message includes the GPSI or SUPI of the UE. The UDM entity returns the network address of the current serving RAN node. If the positioning request is an immediate positioning request, (H-)GMLC checks the serving country code of the serving node address. If (H-)GMLC finds that the current RAN node is not within the service range of (H-)GMLC, (H-)GMLC returns a suitable error message to the LCS client or AF entity.

Step 4: In non-roaming scenarios, this step 4 is skipped. In roaming scenarios, the H-GMLC selects an available V-GMLC in the VPLMN using the NRF service of the PLMN (HPLMN) corresponding to the International Mobile Subscriber Identity (IMSI) of the user's Universal Subscriber Identity Module (USIM) based on the identifier of the Public Land Mobile Network (PLMN) (i.e., the VPLMN identifier) that provides access to the UE included in the RAN address received in step 3. The H-GMLC calls the Ngmlc_ProvideLocation service operation to the V-GMLC and sends a positioning request to the V-GMLC. When the H - GMLC does not receive the V-GMLC address, or when the V-GMLC address is the same as the H-GMLC address, or when there is an agreement between the operators of the two PLMNs, the H-GMLC sends a positioning service request message to the serving RAN. At this time, step 4 is skipped. If the result of the privacy check indicates that the current location does not need to be notified (and verified), the H-GMLC shall send a positioning request to the V-GMLC and indicate to it that "positioning is allowed and notification is not required", and the V-GMLC calls the location information request service operation to the RAN node. If the H-GMLC receives the LCS client type of the AF entity or the LCS client type of the LCS client in steps 1b-2, the H-GMLC also provides the LCS client type parameter to the RAN in step 5.

Step 5: In roaming scenario, V-GMLC first authenticates whether the positioning request from H-GMLC, PLMN or from the country is allowed. If not allowed, an error response is returned. H-GMLC or V-GMLC calls Ngnb_Location_ProvidePositioningInfo service operation to RAN to request the current location of UE. This service operation includes SUPI, client type, and may also include requested LCS QoS, supported GAD graphics, service type, predetermined positioning time and other parameters received from step 1.

Step 6: If the UE is in the CM IDLE state, the RAN node initiates a network-triggered service request process and establishes a signaling connection to the UE.

If the signaling connection fails to be established, steps 7 to 13 are skipped, and the RAN node replies to the GMLC in step 14 with the most recent location of the UE, i.e., the cell identifier, and the time information of the location.

Step 7: If the action associated with the privacy check indication indicates that the UE must be notified or the UE must be notified for privacy confirmation, if the UE supports LCS notification (depending on the UE capability information), a notification call message is sent to the target UE, indicating the identity of the LCS client (if supported and available), the service type (if supported and available) and whether privacy verification needs to be performed.

Step 8: If privacy verification is required, the target UE notifies the user of the positioning request and waits for user authorization. The UE returns a notification result to the RAN node, indicating the current LCS request is allowed or rejected. If the user does not respond within a predetermined time period, the RAN node infers that there is no response. If privacy verification is requested, the user rejects authorization or does not respond, the RAN node returns an error response to the H-GMLC, indicating that the location request is blocked.

The notification result may also indicate the UE privacy setting for subsequent LCS requests, and the privacy setting for subsequent LCS requests indicates whether the UE allows or does not allow subsequent LCS requests. The UE privacy setting may also indicate the time when subsequent LCS requests are not allowed.

Step 9: The RAN node calls the update (Nudm_SDM_Update) service operation to store the privacy settings received from the UE in the UDM. The UDM entity stores the UE privacy settings information in the UDR entity as a subset of the "LCS data" in the subscription data.

Steps 10 to 13 are the same as steps 6 to 9 in Example 1. The difference is that the RAN node may provide the service type to the LMF entity, and the LMF entity may determine the UE position in the local coordinate system, or the UE position in the global coordinate system, or the UE position in both coordinate systems. If the supported GAD shapes are not received in step 11, or the supported GAD shapes do not include the local coordinate system, the LMF entity shall determine the global position. If the predetermined positioning time is received in step 5, the difference between steps 11 and 12 is as follows.

Step 11: The RAN node includes the predetermined positioning time in the Determine Location (Nlmf_Location_DetermineLocation) service operation sent to the LMF entity.

Step 12: When a location request is sent to the UE, the LMF entity may include the predetermined positioning time.

Step 14: The RAN node returns a Ngnb_Location_ProvidePositioningInfo response to the V-GMLC (H-GMLC for roaming scenarios that do not support the NL3 interface), returning the current location of the UE. This service operation includes the location information, the time and accuracy of the information, and may also include information about the positioning method and the timestamp of the location.

Step 15: In a roaming scenario, the V-GMLC forwards to the H-GMLC the location information of the target UE, the time and accuracy of the information, and the optional positioning method information received in step 14. In a non-roaming scenario, step 15 is skipped.

Step 16: If the privacy check in step 2 indicates that further privacy checks are required, the H-GMLC shall perform another privacy check to decide whether to send location information to the LCS client or AF. If the result of the privacy check indicates that the current location request notification and confirmation, the H-GMLC shall perform another privacy check. An example that an additional privacy check is required is when the target user defines different privacy settings for different geographic locations. If no further privacy check is required, the H-GMLC skips steps 17 to 23.

Step 17: If the privacy check in step 15 indicates that the current location needs to be reported (and verified), in a roaming scenario, the H-GMLC shall send a positioning request to the V-GMLC indicating "notify only".

Step 18: The H-GMLC or V-GMLC calls the Ngnb_Location_ProvidePositioningInfo service operation to the RAN node to request notification (and verification) of the current location.

Step 19: If the UE is in the CM-IDLE state, the RAN node initiates a network-triggered service request process and establishes a signaling connection to the UE.

Step 20: If the UE supports LCS notification, the RAN node sends a notification call message to the target UE, indicating the LCS client identifier (if supported and available), service type (if supported and available), and whether privacy verification is required.

Step 21: Same as step 8.

Step 22: The RAN node sends a Ngnb_Location_ProvidePositioningInfo reply to the V-GMLC (H-GMLC in roaming scenarios that do not support the NL3 interface), indicating the result of the notification and verification process in steps 20-21.

Step 23: In the roaming scenario, the V-GMLC sends a notification and the result of the verification process to the H-GMLC. In the non-roaming scenario, step 23 is skipped.

Steps 24a, 24b-1 and 24b-2: H-GMLC sends a positioning service reply to the external positioning service client or AF entity (through the NEF entity). If in step 1, the positioning request of the LCS client or AF entity includes a pseudonym and the H-GMLC converts the pseudonym to GPSI or SUPI, the H-GMLC shall use the pseudonym of the target UE when sending the location reply to the LCS client or AF entity. According to the request of the LCS client or AF entity, the H-GMLC may need to convert the general location information into location information of the local geographic reference system. The H-GMLC may record billing information for the external LCS client or AF entity and cross-network financial billing. The positioning service reply sent by the H-GMLC to the external LCS client or AF entity may include information about the positioning method used and an indication that whether the acquired location information meets the requested accuracy. In steps 2, 16 or 23, if the H-GMLC determines that the target UE does not allow the external LCS client or AF entity to locate it, the H-GMLC rejects the LCS service request and optionally indicates the reason for the rejection in the reply, that is, the target UE is not allowed to be located.

### Embodiment 3: MO-LR (i.e., a positioning request directly initiated by a mobile UE to a positioning management system via an air interface) process;

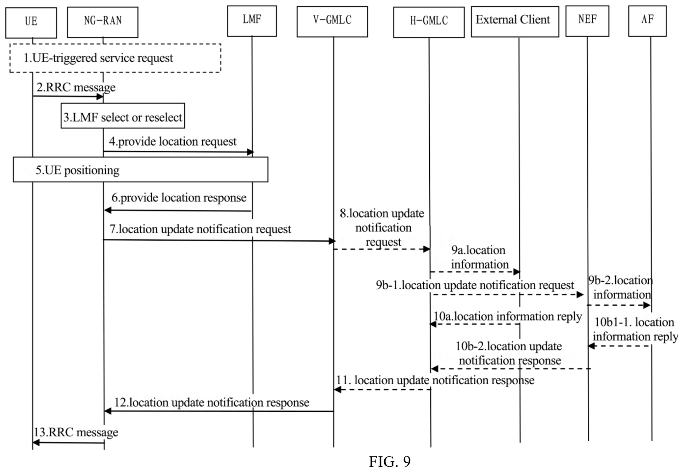

As shown in FIG. 9, a flow chart of a MO-LR process is provided, which specifically includes the following steps.

Step 1: If the UE is in the CM-IDLE state, the UE initiates a UE-triggered service request procedure to establish a signaling connection to the RAN node.

Step 2: The UE sends an UL RRC message, which includes a MO-LR request message and a message type: LM, which indicates that the MO-LR request message is sent to the LMF entity. The MO-LR request may optionally include up to 3 LPP positioning messages. The UE may request different types of positioning services: the location of the UE, the location of the UE sent to the LCS client or AF entity, or positioning assistance data. If the UE requests its own location or sends its own location to the LCS client or AF entity, the message includes the QoS information requested by the LCS (e.g., accuracy, response time, LCS QoS level), the maximum validity time of the requested location, the requested location type (e.g., current location, current or most recent location), and optionally, when a location type is the current location, the message may also include a predetermined positioning time. If the UE requests that the location is sent to the LCS client, the message shall also include the identifier of the LCS client or AF entity, and may also include the address of the GMLC that sends the location information to the LCS client or AF entity. In addition, the message may also include a service type, which indicates which MO-LR service of the LCS client the UE is requesting. The message may also include a pseudonym indication, prompting the network to assign a pseudonym and send the pseudonym to the LCS client as the identifier of the UE. If the UE requests positioning assistance data, the built-in LPP message includes the type of assistance data and the positioning method to which the assistance data applies.

For LCS MO-LR requesting to send the location to LCS client or AF entity, the RAN node shall allocate the GMLC address, i.e. V-GMLC address, which is stored in the RAN node. If the V-GMLC address is not available, the RAN node may reject the positioning request. The RAN node verifies the subscription attributes of the UE and decides whether to allow the requested service. For verification, the RAN node uses the MO subscription data obtained from the UDM entity during the UE registration process.

If the requested location type is "current or last known location" and the requested location maximum time parameter is available, the RAN node determines whether it has stored the previously obtained location of the target UE and the timestamp of the location (if available). If the RAN node has stored the location information and the timestamp of the location (if available), and the location meets the requested accuracy and the requested location maximum time, steps 3 to 6 are skipped.

Step 3: The RAN node selects the LMF entity based on relevant information or NRF entity query.

Step 4: The RAN node calls the Nlmf_Location_DetermineLocation service operation to the LMF entity. The service operation includes the LCS association identifier, the serving cell identifier, the client type, and an indication of whether the request is for location or location assistance data, the MO-LR subscription assistance data list, the UE positioning capabilities (if available), and the LPP message embedded in the MO-LR request. If the request is for UE location, the service operation also includes an indication of whether the UE supports LPP, the requested QoS and supported GAD graphs, and any predetermined positioning time. If the request is for positioning assistance data, the embedded LPP message includes the requested type of positioning assistance data. Once the RAN node selects the LMF entity, the RAN node uses the LMF entity during the signaling process.

It should be noted that if the UE requests its own position, the RAN node does not indicate the GAD shape that supports the local coordinate system.

Step 5: If the UE requests its own location, the process of the following embodiment 7 is performed. If the UE provides a predetermined positioning time, step 12 in embodiment 2 is referred for details. If the UE requests positioning assistance data, the LMF entity sends the data to the UE, as described in embodiment 2. The LMF entity determines the positioning assistance data to be sent based on the type of assistance data requested by the UE, the UE positioning capability, the MO-LR contract assistance data and the current cell.

Step 6: If a location satisfying the requested QoS has been obtained, or the requested positioning assistance data has been sent to the UE, the LMF entity returns a Nlmf_Location_DetermineLocation response to the RAN node. This service operation includes the LCS association identifier, location information (if obtained), time and accuracy of the location, and may also include information on the positioning method.

If the location information is not successfully acquired, or the positioning assistance data cannot be successfully sent to the UE, the above service operation includes a failure reason.

If the UE positioning capability received by the LMF entity in step 5 includes an indication that the capability is immutable, and the LMF entity does not receive the UE positioning capability from the RAN node in step 4, the service operation also includes the UE positioning capability.

If the UE requests assistance data, steps 7 to 12 are skipped.

Step 7: If the location information is successfully obtained, the RAN node sends a location update notification (Ngmlc_Location_LocationUpdateNotify) service operation to the V-GMLC allocated in step 2. The service operation includes the UE identity, the event that triggers positioning (MO-LR), location information, time and accuracy of the location, and the LCS QoS level requested by the target UE. In addition, the service operation may also include a pseudonym indication, LCS client identity, AF ID, GMLC address, and a timestamp of the location and a service identity provided by the UE (if available).

Step 8: If the UE does not request to send the location to the LCS client or AF entity, steps 8 to 11 is skipped. If the V-GMLC and H-GMLC are the same NF entity, this step 8 is skipped. Otherwise, the V-GMLC calls the Ngmlc_Location_LocationUpdateNotify service operation to the H-GMLC (the V-GMLC can request the NRF to obtain the address of the H-GMLC), and the service operation includes the information received from the RAN node.

Step 9a: If the MO-LR location information includes a pseudonym indication, the H-GMLC assigns a pseudonym to the UE. If the H-GMLC cannot access the specified LCS client, steps 9a and 10a are skipped. Otherwise, the GMLC sends location information to the LCS client, including the pseudonym of the UE, the event that triggered the positioning (i.e., MO-LR), the service identity (if available) and location information, and the timestamp of the location (if available) and time, and the LCS QoS level requested by the target UE. If the LCS QoS level requested by the UE is Assured, the GMLC sends the result to the LCS client only if the positioning result meets the QoS requirements. If the LCS QoS level requested by the UE is Best Effort, the GMLC sends any results it receives to the LCS client and sends an indication that the requested accuracy is not met.

It should be noted that: H-GMLC can map the service type received in step 8 into a service identifier.

Step 9b-1: If step 1 includes AF ID, H-GMLC allocates NEF entity according to local configuration or through NRF entity, and calls Ngmlc_Location_LocationUpdateNotify service operation to NEF entity, including AF ID and location information. The location information is the same as step 9a.

Step 9b-2: If the NEF entity cannot access the identified AF entity, steps 9b-2 and 10b-1 are skipped. Otherwise, the NEF entity sends location information to the identified AF entity.

Step 10a: If the LCS client does not support MO-LR (for temporary or permanent reasons) or cannot process the location information of the UE, for example, the LCS client cannot identify the service identifier, or the UE is not registered with the LCS client, and the LCS client does not have the data of the UE, the LCS client shall return a location information confirmation message to the H-GMLC, including the error reason. Otherwise, the LCS client processes the location information according to the service identifier and returns a location information confirmation message to the GMLC or H-GMLC, indicating that the location information of the UE has been successfully processed.

Step 10b-1: If the AF entity cannot process the location of the UE, for example, the UE is not registered with the AF entity and the AF entity does not have the data of the UE, the AF entity shall return a location information confirmation message to the NEF entity, including the appropriate error reason. Otherwise, the AF entity processes the location information according to the service identifier and sends a location information confirmation message to the NEF entity, indicating that the location information of the UE has been successfully processed.

Step 10b-2: The NEF entity sends a Ngmlc_Location_LocationUpdateNotify service operation to the H-GMLC, carrying the location information confirmation.

Step 11: If the V-GMLC and H-GMLC are the same NF entity instance, then step 11 is skipped. If the specified LCS client or AF entity cannot be accessed, the H-GMLC sends a Ngmlc_Location_LocationUpdateNotifyservice operation to the V-GMLC with an appropriate error cause. Otherwise, the reply message includes an acknowledgement. The message shall indicate whether the specified LCS client or AF entity has successfully processed the location of the UE, and if not, the message includes the error cause received in step 10. In addition, the H-GMLC records the billing information for the UE or cross-system financial settlement.

Step 12: If the V-GMLC receives the MO-LR location information confirmation from the H-GMLC, if the specified LCS client or AF entity cannot be accessed, the V-GMLC sends Ngmlc_Location_LocationUpdateNotifyto the RAN node with the appropriate error cause. Otherwise, the reply message shall include an acknowledgement. The message shall indicate whether the specified LCS client or AF entity successfully processed the location of the UE, and if not, the error cause obtained in step 9 or 10 is returned. In addition, the V-GMLC may record billing information for the UE and cross-system financial settlement.

If the V-GMLC receives a LocationUpdateNotify request from the RAN node and does not need to be sent to any LCS client or AF entity, the V-GMLC records the charging information for the UE and replies to the RAN with a LocationUpdateNotify.

Step 13: The RAN node includes the MO-LR reply message in the RRC message and returns it to the UE. If the UE requests its own location, the reply message includes any location information requested by the UE and the timestamp of the location (if available), as well as an indication of whether the location meets the requested accuracy and whether the location is successfully sent to the specified LCS client or AF entity. If successful, the MO-LR reply message also includes whether the specified LCS client or AF entity successfully processed the location information. If not successful, the message also includes the error reason obtained in step 13. In addition, the RAN node records the billing information.

### Embodiment 4: Deferred MT-LR process;

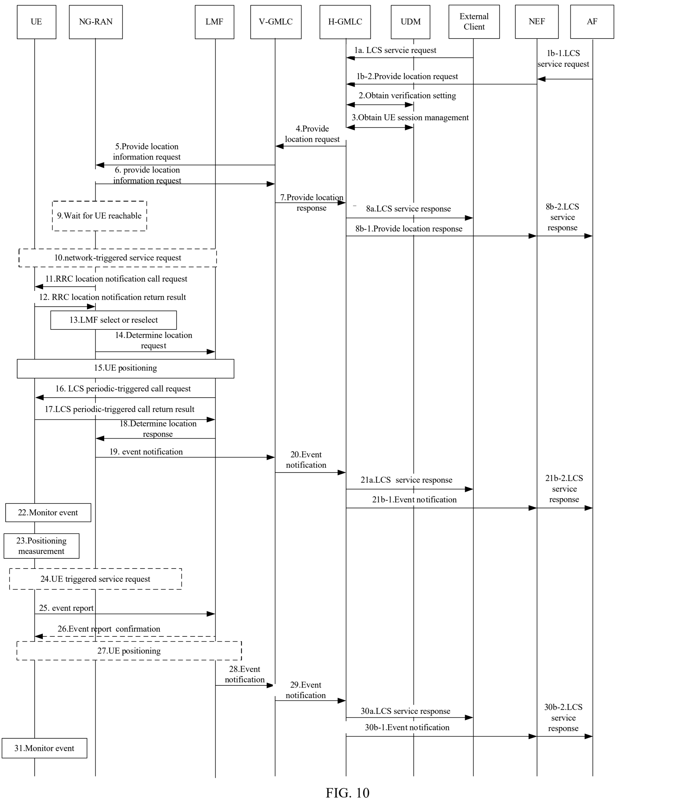

As shown in FIG. 10, a schematic diagram of the MT-LR process is provided, which specifically includes the following steps.

Step 1a: The external client or AF entity related to the positioning service (through the NEF entity) sends a request to the (H-)GMLC, requesting a periodic, conditionally triggered or UE availability related location report. The process of sending the request is the same as step 1 of the above embodiment 2, and the differences are explained here. The LCS service request includes the type of request, i.e., periodic or triggered location report, and related parameters. For periodic location requests, the LCS service request includes the time interval between consecutive location reports, the total number of reports, and may also include location QoS. For periodic location reports, the LCS service request may include a predetermined positioning time for the first periodic location report.

Step 1b-1: The AF entity sends an LCS service request to the NEF entity.

Step 1b-2: The NEF entity forwards the request to the (H-)GMLC.

Step 2: (H-)GMLC can verify the privacy requirements of the UE, which is the same as step 2 of the above embodiment 2.

Step 3: (H-)GMLC requests the RAN address from the UDM entity.

Step 4: For non-roaming UE, step 4 is skipped. For roaming UE, H-GMLC obtains the V-GMLC address and calls the Ngmlc_Provide Location Request service operation to forward the location request to V-GMLC.

Step 5: (H-)GMLC or V-GMLC calls the provide location information request Namf_Location _ProvidePositioningInfo service operation to forward the location request to the serving RAN node. At the same time, the (H-)GMLC address and LDR index number are also provided.

Steps 6-8b-1: If the RAN node supports deferred location request, the RAN node returns an acknowledgement to the external LCS client via (H-)GMLC (or V-GMLC in roaming scenario), indicating acceptance of the deferred location request. When V-GMLC is used, it may release the resources for the deferred location request at this time (optional).

Step 9: If the UE is currently unreachable, for example, an extended DRX cycle (eDRX) or Power saving Mode (PSM) are using, the RAN node waits for the UE to be reachable.

Step 10: Once the UE is reachable, if the UE enters the CM-IDLE state again, the RAN node initiates a network-triggered service request process and establishes a signaling connection to the UE.

Steps 11-12: if the location request received in step 5 requsts a privacy check and the UE supports this function, the RAN node performs the same steps as steps 7-8 of embodiment 2, notifies the UE of the location request, and verifies the privacy requirement. If the type of the deferred location request is a periodic or triggered location request, the RAN node also includes the type of the deferred location request in the notification message.

Step 13: the RAN node selects the LMF entity based on the available information or based on the local configuration of the RAN node. The NRF entity may be used in the selection process.

Step 14: the RAN node calls the Nlmf_Location_DetermineLocation Request service operation to the LMF entity, requesting the deferred UE location. For periodic or triggered location requests, this service operation includes all the information received in step 4 or 5, including the (H-)GMLC address, LDR index number, UE positioning capabilities (if available), and any predetermined positioning time. For the location request requesting UE availability events, the service operation does not include the (H-)GMLC address and LDR index number. In all scenarios, this service operation includes the LCS association identifier, AMF identifier, serving cell identifier, client type, and may also include an indication of whether the UE supports LPP, required QoS and supported graph partitioning (GAP) graphs.

Step 15: The LMF entity performs the positioning process as described in Example 7 below. In this step 15, the LMF entity may request or obtain the UE positioning capabilities (e.g., the types of location requests supported by the UE, the access types supported by the UE for receiving event reports). The LMF entity may also obtain the UE location, for example, for an event requesting the available location of the UE, or a periodic or triggered deferred location request, the initial location of the UE is requested. For a request requesting an UE available location event, the LMF entity skips steps 16 and 17.

Step 16: If the request is for periodic or triggered location, the LMF entity calls the service operation and sends an LCS periodic-triggered location call request to the UE through the RAN node.

Step 17: If the request in step 16 can be supported, the UE returns a service confirmation to the LMF entity, and the RAN node sends a message to the LMF entity according to the immediate routing identifier included in the service operation.

Step 18: The LMF entity returns a Ngnb_Location_DetermineLocation reply message to the RAN node in response to the request message received in step 14. If the request is for a UE available location event, the reply message includes any UE location obtained in step 15, and the LMF entity releases all resources. For periodic or triggered location requests, the reply includes any UE location obtained in step 15, confirmation of the periodic or triggered location is successfully activated in the UE, and the LMF identifier (if the serving LMF is activated); if the LMF entity is a serving LMF entity, the LMF entity maintains status information and resource information. If the UE cannot support periodic and triggered location requests, the service operation returned to the RAN node should include an appropriate error cause. If the LMF entity receives UE positioning capabilities in step 15 and the parameter includes an indication of immutable capabilities, and the LMF entity did not receive UE positioning capabilities from the RAN node in step 14, the service operation also includes UE positioning capabilities.

Step 19: The RAN node calls the event notification (Ngnb_Location_EventNotify) service operation to the V-GMLC (roaming scenario) or (H-)GMLC (non-roaming scenario), and the message includes any location information received in step 18. For periodic or conditionally triggered location, the message also includes confirmation whether the periodic or triggered location request has been successfully activated at the target UE. If V-GMLC is used, the V-GMLC in this step 19 may be different from the V-GMLC used in steps 5 and 6, or it may be the same V-GMLC. If it is a different V-GMLC, the RAN node includes the H-GMLC address and LDR index number in the message. The RAN node also includes the LMF identifier in the message (if this information is received in step 18). The RAN node may release all resources for the location request and stop supporting the procedure.

Step 20: For non-roaming UEs, this step is skipped. For roaming UEs, the V-GMLC forwards the reply message received in step 19 to the H-GMLC using the H-GMLC address received in step 19 (using a different V-GMLC) or the H-GMLC address received and stored in step 4 (using the same V-GMLC), and provides the H-GMLC with the LDR index number and any LMF identifier. The V-GMLC may release all resources for the location request and stop supporting the procedure.

Steps 21a, 21b-1 and 21b-2: H-GMLC sends a reply to the external LCS client or AF entity (through the NEF entity). If the positioning request in step 1 is related to the UE available location event, the process is terminated and steps 22 to 31 do not need to be executed.

Step 22: For periodic or triggered location requests, steps 16 and 17 have been successfully executed, and the UE monitors whether the trigger condition or periodic event requested in step 16 occurs. For area events or mobile events, the UE monitors the requested event using a time interval equal to or less than the time interval according to the maximum event sampling time interval. The UE monitors the event when any of the following occurs: 1) the UE monitors the requested area event or mobile event, and the time interval from the last report (i.e., this is not the first report) to the current time exceeds the minimum reporting time interval; 2) the requested periodic location event has occurred; or 3) the maximum reporting time of the area event or monitoring event has timed out. When a trigger condition or periodic event is detected, if the access type to which the UE is currently residing or connected is an access type allowed by the LMF entity in step 16, the UE executes step 23. If the UE cannot access the allowed access type, the UE may skip reporting the trigger event, or trigger the event report when the allowed access type is available. For periodic location requests, if a predetermined positioning time is provided in step 16, for the first periodic event report, the UE should perform steps 23 to 25 at a time before the predetermined positioning time, and for each subsequent periodic event report, the UE should perform steps 23 to 25 at a time before the expiration of the periodic interval, with the aim of performing position measurements in step 23 or step 27 at a time close to or before each of the above times.

Step 23: The UE obtains location measurement or location information according to the requirements of step 16.

Step 24: If the UE is in an idle state, the UE executes a UE-triggered service request process and establishes a signaling connection to the RAN node.

Step 25. The UE sends a service event report to the LMF entity through the serving RAN node, and the RAN node sends the event report to the LMF entity. The time report may indicate the type of event reported (e.g., a normal event, or a time interval exceeding the maximum reporting time interval), and may also include a positioning message, the message includes the location measurement or location information and the timestamp of the location (if available) obtained in step 23. The UE also includes the deferred routing identifier received in step 16 in the transmission message, and the RAN node sends the event report to the appropriate LMF entity based on the deferred routing identifier (indicating a specific LMF entity or any LMF entity). If an LMF entity other than the serving LMF entity is used, the UE also provides the H-GMLC address, LDR index number, whether location information needs to be reported, and if necessary, location QoS, as well as any predetermined positioning time received in step 16 in the event report.

Step 26: When the LMF entity receives the event report, if the LMF entity can process the event report, the LMF entity returns an acknowledgment to the UE. The acknowledgment may include a new routing identifier (identifying the new serving LMF) or a default (any) LMF entity. If the UE does not receive any reply from the LMF entity within a predetermined time, that is, the current LMF entity does not support deferred location requests (for temporary or permanent reasons), or no reply is received due to a radio access failure, the UE may resend the report (one or more times). If the UE repeatedly sends the event report more than the predetermined maximum number of retransmissions and the UE still does not receive a reply, the UE shall stop sending reports and set a flag to indicate that the report was not successfully sent. When the UE performs a location update and detects a change in the Tracking Area Identity (TAI), if the UE sets the flag, the UE shall send a report to the corresponding RAN node, and the UE clears the flag after successfully sending the report.

Step 27: If the event report requests to provide the UE location, the LMF entity may perform the positioning process of embodiment 7 and step 12 of embodiment 2. The LMF entity determines the UE location using the location measurement and/or location information. The LMF entity may also determine the timestamp of the location.

Step 28: In the roaming scenario, the LMF entity selects a V-GMLC (different from the V-GMLC in steps 3-8 and steps 19-21), and the LMF entity calls the Nlmf_EventNotify service operation to the selected V-GMLC or H-GMLC. The message includes the reported event type, the H-GMLC address and LDR index number, the LMF identifier (if the LMF is the service LMF), and any location information and the timestamp of the location (if available) obtained in step 27.

Step 29: For non-roaming UEs, this step is skipped. For roaming UEs, the V-GMLC calls the Ngmlc_EventNotify service operation to send the information received in step 28 (e.g., the type of event reported, the LDR index number, and possibly the LMF identifier) to the H-GMLC.

Steps 30a, 30b-1 and 30b-2: The H-GMLC uses the LDR index number received in step 28 or 29 to identify the periodic and triggered location requests received in step 1 and sends the type of event reported, as well as the location information and the timestamp of the location (if applicable) to the external LCS client or AF entity (via the NEF entity). The H-GMLC may also verify the privacy requirements of the UE before reporting any event or any location to the external LCS client or AF entity.

Step 31: The UE continues to monitor periodic or triggered events, and after detecting an event, steps 23 to 30 are performed.

### Embodiment 5: the AF entity or the external client of the LCS cancels the reporting of a location event;

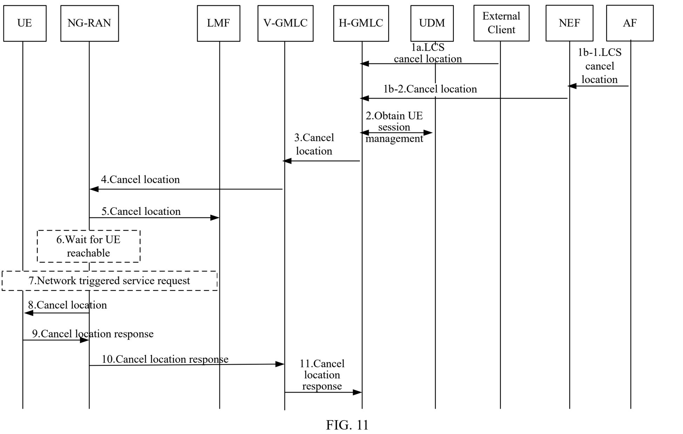

As shown in FIG. 11, a schematic diagram of the AF entity or external client canceling a request is provided, which specifically includes the following steps.

Step 1a, Step 1b-1 and Step 1b-2: The external client of LCS or the AF entity (through the NEF entity) sends a cancellation of the periodic or triggered location request to the H-GMLC.

The H-GMLC initiates the cancellation procedure, for example when it is notified of a change in the UE privacy settings. For each deferred location request, the H-GMLC shall perform a privacy check according to the latest privacy settings stored in the UDM entity. If the privacy check passes, i.e. the LCS client is still allowed to locate the UE, the deferred location request shall proceed. Otherwise, if the privacy check fails, i.e. the UE location information is not allowed to be provided to the LCS client, the H-GMLC shall initiate the cancellation procedure.

Step 2: H-GMLC requests the UDM entity to determine the serving RAN address.

Step 3: For roaming UE, H-GMLC obtains V-GMLC address and calls Cancel Location (Ngmlc_CancelLocation) service operation to forward the cancellation request to V-GMLC. H-GMLC also provides H-GMLC address and LDR index number and the latest LMF identifier received in step 20 or 29 of the above embodiment 4 in the request (if step 20 or 29 is executed and LMF identifier is provided, that is, the changed LMF identifier).

Step 4: The H-GMLC or V-GMLC calls the Namf_Location_CancelLocation service operation and forwards the cancellation request to the serving RAN node, providing the H-GMLC address, LDR index number and LMF identifier (if available).

Step 5: If step 4 includes the LMF identifier, the RAN node sends a cancellation request to the indicated LMF entity by calling the Nlmf_CancelLocation service operation and providing the H-GMLC address and LDR index number. The LMF entity releases all resources related to the location request.

Step 6: If the UE is currently unreachable (e.g. using eDRX or PSM), the RAN node waits for the UE to become reachable.

Step 7: Once the UE is reachable, if the UE is in CM IDLE state, the RAN node initiates a network-triggered service request procedure to establish a signaling connection to the UE.

Step 8: The RAN node sends a cancellation request to the target UE, including the H-GMLC address and LDR index number. The UE releases all resources related to the location request.

Step 9: The UE returns an acknowledgement to the RAN node.

Step 10: The RAN node returns a confirmation to the V-GMLC or H-GMLC.

Step 11: For roaming UE, V-GMLC returns confirmation to H-GMLC.

### Embodiment 6: LMF entity change process

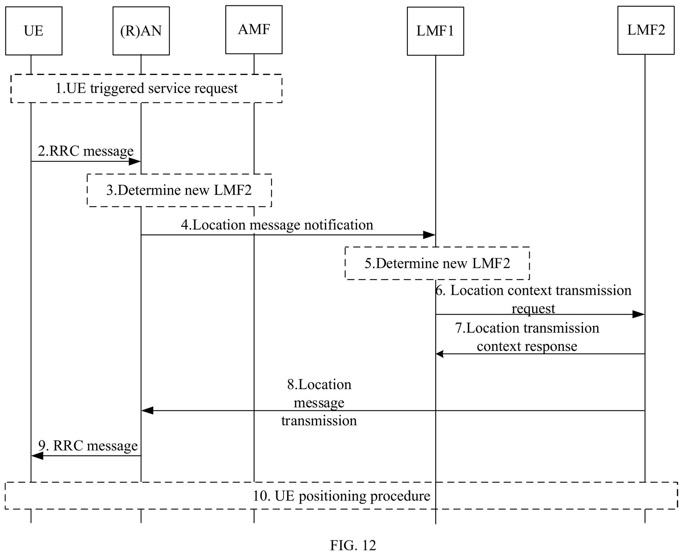

As shown in FIG. 12, a schematic diagram of the LMF entity change process is given, which specifically includes the following steps.

Step 1: If the UE is in IDLE state, the service request process is initiated.

Step 2: The UE sends an RRC message including a service event report to the serving RAN node. The RRC message includes a deferred routing identifier (indicating LMF1).

Step 3: Based on the operator configuration and policy, the RAN node may evaluate and decide that LMF1 is not suitable or cannot be located in the current access network or serving cell of the UE, and the RAN node decides that LMF2 is more suitable. The RAN node may have obtained information about LMF2, such as through previous NRF entity discovery or local configuration, otherwise the RAN node requests the NRF entity and obtains a set of LMF entity attributes in the reply message. The RAN node selects a new LMF entity (i.e., LMF2) for the current location of the UE based on the LMF serving area (including one or more TA(s)).

Step 4: The RAN node calls a service operation to LMF1. The service operation includes the event report received in step 2. If the RAN node decides in step 3 that a new LMF2 needs to be used, it sends this information to LMF1.

Step 5: If the RAN node does not indicate a new LMF entity in step 4 based on the operator configuration and policy, LMF1 may decide that it is not suitable or cannot be located in the current access network or serving cell of the UE, and decide that LMF2 is more suitable. information about LMF2 has stored in LMF1, such as information obtained or locally configured during a previous NRF entity discovery process, otherwise LMF1 requests the NRF entity and obtains a set of LMF attributes in the reply message. LMF1 selects a new LMF entity (i.e., LMF2) for the current location of the UE based on the LMF serving area (including one or more TA(s)).

Step 6: LMF1 calls a location context transfer Nlmf_LocationContextTransfer request service operation from LMF2, providing the current location context of the UE and including the event report message received in step 4. The service operation includes the RAN identifier and all information related to the deferred location request stored by LMF1. The service material may also include the current status of the event report, such as the number of event reports received for the UE and/or the period of event reports, and may also include information related to the location of the UE, such as previously provided location information and location timestamps (if available) or location measurements.

Step 7: LMF2 notifies LMF1 of the result of the location context transfer operation. LMF1 releases all resources of the process.

Step 8: LMF2 calls a service operation from the RAN node, requesting that an event report confirmation message be transmitted to the UE. The event report confirmation indicates that the LMF entity has changed, and provides a new deferred routing identifier, indicating LMF2.

Step 9: The RAN node sends an event report confirmation to the UE via an RRC message, and the RAN node notifies the LMF2 of the result of the transmission event report confirmation.

Step 10: If the event report requests to provide a location, LMF2 locates the UE and determines the UE location in step 27 of embodiment 4. The remaining steps in embodiment 4 will continue from step 28, and LMF2 maintains state information and supports subsequent event reports from the UE.

### Embodiment 7: UE-assisted and UE-based positioning process;

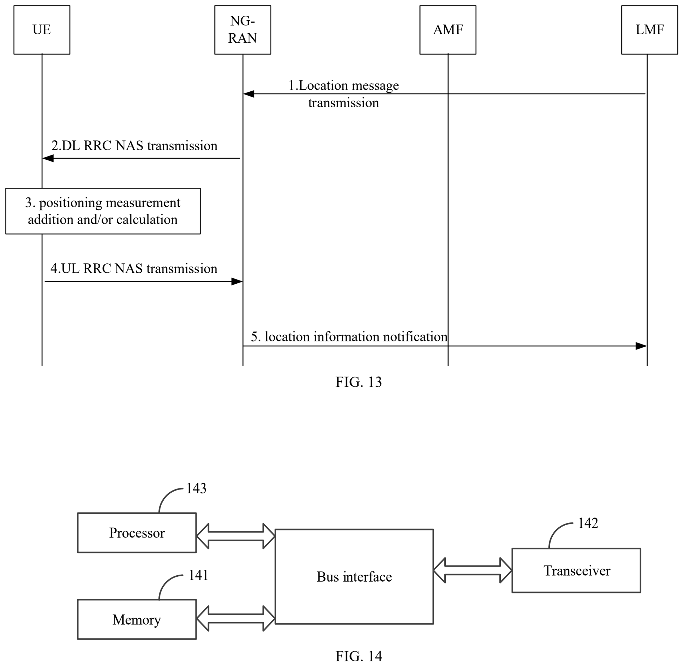

As shown in FIG. 13, a schematic diagram of a UE positioning process performed by an LMF entity is provided, which specifically includes the following steps.

Step 1: The LMF entity calls a service operation from the RAN node to request the transmission of a downlink (DL) positioning message to the UE. The service operation includes a DL positioning message. The session ID parameter of the service operation is set to the LCS related identifier. The downlink positioning message can request location information from the UE, provide assistance data to the UE, or query the UE capabilities (if the LMF has not received the UE positioning capabilities from the RAN).

Step 2: The RAN node forwards the downlink positioning message to the UE in a DL RRC NAS transmission message. The message includes a routing identifier, which is set to the LCS related identifier.

Step 3: The UE stores any assistance data provided in the downlink positioning message and performs any positioning measurements and position calculations requested by the downlink positioning message.

Step 4: The UE shall return any location information obtained in step 3 in the uplink positioning message contained in the RRC UL NAS TRANSPORT message, or return any functions requested in step 3 to the RAN node. The UE shall also include the routing identifier in the UL NAS transport message received in step 3.

Step 5: The RAN node calls a service operation directed to the LMF entity indicated by the routing identifier received in step 4. The service operation includes the uplink positioning message and the LCS correlation identifier received in step 4. If the UE needs to send multiple messages in response to the request received in step 2, steps 4 and 5 may be repeated. Steps 1 to 5 may be repeated to send new assistance data and request further location information and further UE capabilities.

The above embodiments introduce the positioning processing method of the present disclosure. The following embodiments will further illustrate the corresponding device in conjunction with the accompanying drawings.

As shown in FIG. 14, one embodiment of the present disclosure provides a positioning processing device, such as the positioning processing device applied to an access network node, including a memory 141, a transceiver 142, and a processor 143; wherein the memory 141 is used to store a computer program; the transceiver 142 is used to send and receive data under the control of the processor 143; such as the transceiver 142 is used to receive and send data under the control of the processor 143; the processor 143 is used to read the computer program in the memory 141 and perform the following operations:
receiving a first request message;
performing an LMF entity selection or reselection based on the first request message to determine a target LMF entity;
sending a second request message to the target LMF entity; wherein the second request message is used to instruct to perform a positioning processing on a UE.

Optionally, the processor 143 is used to read the computer program in the memory 141 and perform the following operations:
receiving the first request message sent by a GMLC; wherein the first request message is used to request to obtain a location information of the UE;
   or,
receiving the first request message sent by the UE; wherein the first request message is used for at least one of: requesting to obtain the location information of the UE, instructing to provide the location information of the UE to a client or an application function entity, and requesting to obtain location assistance information.

Optionally, the first request message sent by the GMLC carries at least one of the following information:
SUPI information of the UE;
type information of a client requesting the location information of the UE;
a QoS of the UE;
a geographical area description (GAD) graphics supported by the UE;
first indication information used to indicate a service type for requesting the location information of the UE;
a predefined positioning time of the requested location information of the UE;
second indication information used to indicate that the UE needs to be notified to provide the location information and/or the UE needs to be notified to perform privacy verification;
third indication information used to indicate a type of postponing transmission of the location information of the UE;
address information of the GMLC;
identifier information of an LDR.

Optionally, the processor 143 is used to read the computer program in the memory 141 and perform the following operations:
sending a notification message to the UE based on the second indication information; wherein the notification message is used to notify the UE to provide the location information and/or request the privacy verification;
receiving a notification response message sent by the UE; wherein the notification response message carries fourth indication information used to indicate whether to allow providing the location information and/or a result of the privacy verification;
in the case where the fourth indication information is used to indicate that it is allowed to providing the location information and/or the result of the privacy verification is authorized, performing LMF entity selection or reselection.

Optionally, the processor 143 is used to read the computer program in the memory 141 and perform the following operations:
in a case where the notification response message is not received, or the fourth indication information is used to indicate that it is not allowed to provide the location information and/or the result of the privacy verification is not authorized, sending fifth indication information used to instruct the UE to reject to provide the location information to the GMLC.

Optionally, the notification response message further carries at least one of the following information:
privacy setting information, used to instruct the UE to allow or reject to continue to provide location information;
time information, used to instruct the UE to reject to continue to provide location information before the target time and/or to reject to continue to provide location information within the target duration.

Optionally, the processor 143 is used to read the computer program in the memory 141 and perform the following operations:
sending a first response message to the GMLC based on the third indication information; wherein the first response message is used to indicate confirmation of postponing transmission of the location information of the UE;
receiving the location information of the UE;
sending the location information of the UE to the GMLC according to a type of postponing transmission of the location information of the UE supported.

Optionally, the type of postponing sending the location information of the UE includes at least one of the following:
periodically sending the location information of the UE;
sending the location information of the UE when a trigger condition is met.

Optionally, the processor 143 is used to read the computer program in the memory 141 and perform the following operations:
in the case where the UE is in a CM IDLE state, sending a third request message to the UE; wherein the third request message is used to request to establish a signaling connection to the UE;
receiving a third response message sent by the UE;
in a case where the third response message indicates that the signaling connection is successful, performing the selecting or reselecting of the LMF entity.

Optionally, the processor 143 is used to read the computer program in the memory 141 and perform the following operations:
in a case where the third response message indicates that the signaling connection fails, sending a most recently obtained location information of the UE to the GMLC.

Optionally, the processor 143 is used to read the computer program in the memory 141 and perform the following operations:
receiving a cancellation request message sent by the GMLC;
sending sixth indication information for indicating cancellation of obtaining the location information of the UE to the target LMF entity and the UE respectively based on the cancellation request message.

Optionally, the first request message sent by the UE carries at least one of the following information:
seventh indication information used to instruct sending a request message to the LMF entity;
QoS of the UE;
a maximum validity time for requesting the location information of the UE;
eighth indication information used to indicate the type of the requested location information of the UE;
a predefined positioning time of the requested location information of the UE;
identifier information of a client;
identifier information of an application function entity;
address information of the GMLC that sends location information to the client or the application function entity;
ninth indication information used to indicate a service type of requesting or providing the location information of the UE;
tenth indication information for instructing to assign a pseudonym;
eleventh indication information used to indicate a type of location assistance information;
twelfth indication information used to indicate an application scenario of the location assistance information.

Optionally, the first request message sent by the UE is a radio resource control RRC message.

Optionally, the processor 143 is used to read the computer program in the memory 141 and perform the following operations:
receiving the location information of the UE sent by the target LMF entity;
sending the location information to the UE; wherein the location information is carried in an RRC message, and the RRC message further carries at least one of:
a timestamp of the location information;
thirteenth indication information used to indicate whether the location information meets an accuracy requirement;
fourteenth indication information used to indicate whether the location information is successfully provided to the client or the application function entity;
fifteenth indication information used to indicate whether the client or the application function entity successfully processes the location information;
sixteenth indication information is used to indicate a reason why the client or the application function entity fails to process the location information.

Optionally, the processor 143 is used to read the computer program in the memory 141 and perform the following operations:
receiving a second response message sent by the target LMF entity;
sending downlink positioning information to the UE based on the second response message; wherein the downlink positioning information carries location assistance information used for positioning measurement;
receiving the positioning measurement result sent by the UE, and sending the positioning measurement result to the target LMF entity;
receiving the location information of the UE sent by the target LMF entity based on the positioning measurement result, and sending the location information to the UE or GMLC.

Optionally, the second request message carries at least one of the following information:
identifier information associated with an LCS;
identifier information of the access network node;
identifier information of a serving cell;
fifteenth indication information used to indicate a type of the client requesting to obtain the location information of the UE,
sixteenth indication information used to indicate a positioning protocol supported by the UE;
QoS of the UE;
positioning capability information of the UE;
GAD graphics supported by the UE;
seventeenth indication information used to indicate a service type of requesting or providing the location information of the UE;
eighteenth indication information used to indicate requesting the location information or location assistance information of the UE;
a list of subscribed location assistance information;
a predefined positioning time of the requested location information of the UE;
nineteenth indication information used to indicate a type of the location assistance information.

Among them, in FIG. 14, the bus architecture can include any number of interconnected buses and bridges, specifically one or more processors represented by processor 143 and various circuits of memory represented by memory 141 are linked together. The bus architecture can also link various other circuits such as peripheral devices, voltage regulators, and power management circuits together, which are all well known in the art, so they are not further described in the present disclosure. The bus interface provides an interface. The transceiver 142 can be a plurality of components, that is, including a transmitter and a receiver, providing a unit for communicating with various other devices on a transmission medium, and these transmission media include transmission media such as wireless channels, wired channels, and optical cables. The processor 143 is responsible for managing the bus architecture and general processing, and the memory 141 can store data used by the processor 143 when performing operations.

The processor 143 may be a central processing unit (CPU), an application specific integrated circuit (ASIC), a field programmable gate array (FPGA) or a complex programmable logic device (CPLD). The processor may also adopt a multi-core architecture.

It should be noted here that the above-mentioned device provided in the embodiment of the present disclosure can implement all the method steps implemented in the above-mentioned method embodiment at the access network node side, and can achieve the same technical effect. The parts and beneficial effects that are the same as the method embodiment in this embodiment will not be described in detail here.

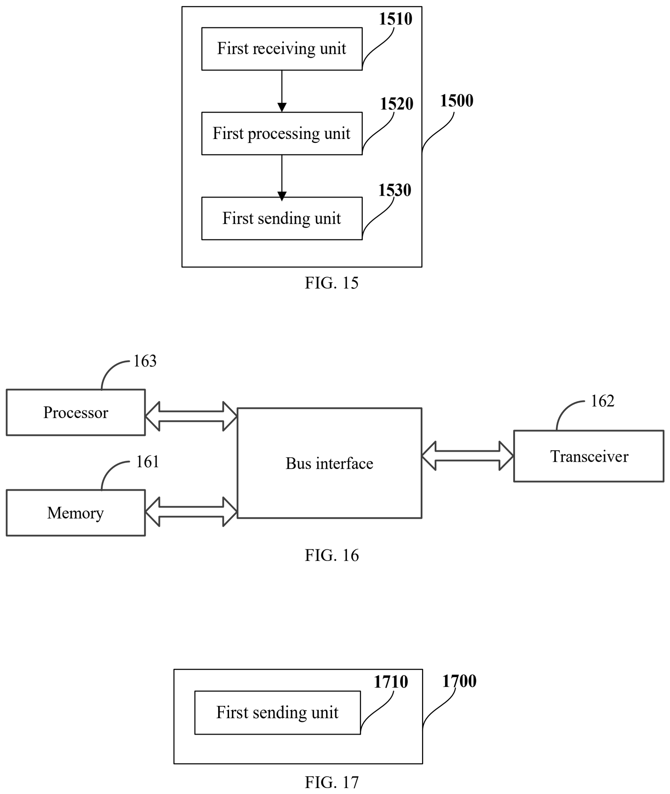

As shown in FIG. 15, the embodiment of the present disclosure further provides a positioning processing device 1500, which is applied to an access network node, including:
a first receiving unit 1510, used to receive a first request message;
a first processing unit 1520, used to perform location management function LMF entity selection or reselection based on the first request message, and determine a target LMF entity;
a first sending unit 1530, used to send a second request message to the target LMF entity; wherein the second request message is used to instruct positioning processing of the UE.

Optionally, the first receiving unit 1510 is further used to:
receive the first request message sent by a GMLC; wherein the first request message is used to request to obtain a location information of the UE;
   or,
receive the first request message sent by the UE; wherein the first request message is used for at least one of: requesting to obtain the location information of the UE, instructing to provide the location information of the UE to a client or an application function entity, and requesting to obtain location assistance information.

Optionally, the first request message sent by the GMLC carries at least one of the following information:
SUPI information of the UE;
type information of a client requesting the location information of the UE;
a QoS of the UE;
a geographical area description (GAD) graphics supported by the UE;
first indication information used to indicate a service type for requesting the location information of the UE;
a predefined positioning time of the requested location information of the UE;
second indication information used to indicate that the UE needs to be notified to provide the location information and/or the UE needs to be notified to perform privacy verification;
third indication information used to indicate a type of postponing transmission of the location information of the UE;
address information of the GMLC;
identifier information of an LDR.

Optionally, the positioning processing device 1500 further includes:
a second receiving unit, used to send a notification message to the UE based on the second indication information; wherein the notification message is used to notify the UE to provide the location information and/or request the privacy verification;
a third receiving unit, used to receive a notification response message sent by the UE; wherein the notification response message carries fourth indication information used to indicate whether to allow providing the location information and/or a result of the privacy verification;
a second processing unit, used to, in the case where the fourth indication information is used to indicate that it is allowed to providing the location information and/or the result of the privacy verification is authorized, perform LMF entity selection or reselection.

Optionally, the positioning processing device 1500 further includes:
a second sending unit, used to, in a case where the notification response message is not received, or the fourth indication information is used to indicate that it is not allowed to provide the location information and/or the result of the privacy verification is not authorized, send fifth indication information used to instruct the UE to reject to provide the location information to the GMLC.

Optionally, the notification response message further carries at least one of the following information:
privacy setting information, used to instruct the UE to allow or reject to continue to provide the location information;
time information, used to instruct the UE to reject to continue to provide the location information before a target time and/or to reject to continue to provide the location information within a target duration.

Optionally, the positioning processing device 1500 further includes:
a third sending unit, used to send a first response message to the GMLC based on the third indication information; wherein the first response message is used to indicate confirmation of postponing transmission of the location information of the UE;
a fourth receiving unit, used to receive the location information of the UE;
a fourth sending unit, used to send the location information of the UE to the GMLC according to a type of postponing transmission of the location information of the UE supported.

Optionally, the type of postponing sending the location information of the UE includes at least one of the following:
periodically sending the location information of the UE;
sending the location information of the UE when a trigger condition is met.

Optionally, the positioning processing device 1500 further includes:
a fifth sending unit, used to, in the case where the UE is in a CM IDLE state, send a third request message to the UE; wherein the third request message is used to request to establish a signaling connection to the UE;
a fifth receiving unit, used to receive a third response message sent by the UE;
a fourth processing unit, used to, in a case where the third response message indicates that the signaling connection is successful, perform LMF entity selection or reselection.

Optionally, the positioning processing device 1500 further includes:
a sixth sending unit, used to, in a case where the third response message indicates that the signaling connection fails, send a most recently obtained location information of the UE to the GMLC.

Optionally, the positioning processing device 1500 further includes:
a sixth receiving unit, used to receive a cancellation request message sent by the GMLC;
a fifth processing unit, used to send sixth indication information for indicating cancellation of obtaining the location information of the UE to the target LMF entity and the UE respectively based on the cancellation request message.

Optionally, the first request message sent by the UE carries at least one of the following information:
seventh indication information used to instruct sending a request message to the LMF entity;
QoS of the UE;
a maximum validity time for requesting the location information of the UE;
eighth indication information used to indicate the type of the requested location information of the UE;
a predefined positioning time of the requested location information of the UE;
identifier information of a client;
identifier information of an application function entity;
address information of the GMLC that sends location information to the client or the application function entity;
ninth indication information used to indicate a service type of requesting or providing the location information of the UE;
tenth indication information for instructing to assign a pseudonym;
eleventh indication information used to indicate a type of location assistance information;
twelfth indication information used to indicate an application scenario of the location assistance information.

Optionally, the first request message sent by the UE is a radio resource control RRC message.

Optionally, the positioning processing device 1500 further includes:
a seventh receiving unit, used to receive the location information of the UE sent by the target LMF entity;
a seventh sending unit, used to send the location information to the UE; wherein the location information is carried in an RRC message, and the RRC message further carries at least one of:
a timestamp of the location information;
thirteenth indication information used to indicate whether the location information meets an accuracy requirement;
fourteenth indication information used to indicate whether the location information is successfully provided to the client or the application function entity;
fifteenth indication information used to indicate whether the client or the application function entity successfully processes the location information;
sixteenth indication information is used to indicate a reason why the client or the application function entity fails to process the location information.

Optionally, the positioning processing device 1500 further includes:
an eighth receiving unit, used to receive a second response message sent by the target LMF entity;
an eighth sending unit, used to send downlink positioning information to the UE based on the second response message; wherein the downlink positioning information carries location assistance information used for positioning measurement;
a ninth receiving unit, used to receive the positioning measurement result sent by the UE, and sending the positioning measurement result to the target LMF entity;
a tenth receiving unit, used to receive the location information of the UE sent by the target LMF entity based on the positioning measurement result, and sending the location information to the UE or GMLC.

Optionally, the second request message carries at least one of the following information:
identifier information associated with an LCS;
identifier information of the access network node;
identifier information of a serving cell;
fifteenth indication information used to indicate a type of the client requesting to obtain the location information of the UE,
sixteenth indication information used to indicate a positioning protocol supported by the UE;
QoS of the UE;
positioning capability information of the UE;
GAD graphics supported by the UE;
seventeenth indication information used to indicate a service type of requesting or providing the location information of the UE;
eighteenth indication information used to indicate requesting the location information or location assistance information of the UE;
a list of subscribed location assistance information;
a predefined positioning time of the requested location information of the UE;
nineteenth indication information used to indicate a type of the location assistance information.

It should be noted here that the above-mentioned device provided in the embodiment of the present disclosure can implement all the method steps implemented in the above-mentioned method embodiment at the access network node side, and can achieve the same technical effect. The parts and beneficial effects that are the same as the method embodiment in this embodiment will not be described in detail here.

As shown in FIG. 16, the embodiment of the present disclosure further provides a positioning processing device, such as the positioning processing device applied to GMLC, including a memory 161, a transceiver 162, and a processor 163; wherein the memory 161 is used to store a computer program; the transceiver 162 is used to send and receive data under the control of the processor 163; such as the transceiver 162 is used to receive and send data under the control of the processor 163; the processor 163 is used to read the computer program in the memory 161 and perform the following operations:
sending a first request message to an access network node; wherein the first request message is used to request to obtain location information of a UE.

Optionally, the first request message carries at least one of the following information:
SUPI information of the UE;
type information of a client requesting the location information of the UE;
QoS of the UE;
a GAD graphics supported by the UE;
first indication information used to indicate a service type for requesting the location information of the UE;
a predefined positioning time of the requested location information of the UE;
second indication information used to indicate that the UE needs to be notified to provide the location information and/or the UE needs to be notified to perform privacy verification;
third indication information used to indicate a type of postponing transmission of the location information of the UE;
address information of the GMLC;
identifier information of an LDR.

Optionally, the processor 163 is used to read the computer program in the memory 161 and perform the following operations:
receiving a first response message sent by the access network node; wherein the first response message is used to indicate confirmation of postponing transmission of the location information of the UE;
receiving the location information of the UE sent by the access network node based on a type of postponing transmission of the location information of the UE supported by the access network node.

Optionally, the type of postponing sending the location information of the UE includes at least one of the following:
periodically sending the location information of the UE;
sending the location information of the UE when a trigger condition is met.

Optionally, the processor 163 is used to read the computer program in the memory 161 and perform the following operations:
sending a cancellation request message to the access network node; wherein the cancellation request message is used to indicate cancellation of obtaining the location information of the UE.

Among them, in FIG. 16, the bus architecture can include any number of interconnected buses and bridges, specifically one or more processors represented by processor 163 and various circuits of memory represented by memory 161 are linked together. The bus architecture can also link various other circuits such as peripheral devices, voltage regulators, and power management circuits together, which are all well known in the art, so they are not further described herein. The bus interface provides an interface. The transceiver 162 can be a plurality of components, that is, including a transmitter and a receiver, providing a unit for communicating with various other devices on a transmission medium, and these transmission media include transmission media such as wireless channels, wired channels, and optical cables. The processor 163 is responsible for managing the bus architecture and general processing, and the memory 161 can store data used by the processor 163 when performing operations.

The processor 163 may be a central processing unit (CPU), an application specific integrated circuit (ASIC), a field programmable gate array (FPGA) or a complex programmable logic device (CPLD). The processor may also adopt a multi-core architecture.

It should be noted here that the above-mentioned device provided in the embodiment of the present disclosure can implement all the method steps implemented in the above-mentioned method embodiment at the GMLC side, and can achieve the same technical effect. The parts and beneficial effects that are the same as the method embodiment in this embodiment will not be described in detail here.

FIG. 17, the embodiment of the present disclosure further provides a positioning processing device 1700, which is applied to GMLC and includes:
a first sending unit 1710, used to send a first request message to an access network node; wherein the first request message is used to request to obtain location information of a UE.

Optionally, the first request message carries at least one of the following information:
SUPI information of the UE;
type information of a client requesting the location information of the UE;
QoS of the UE;
a GAD graphics supported by the UE;
first indication information used to indicate a service type for requesting the location information of the UE;
a predefined positioning time of the requested location information of the UE;
second indication information used to indicate that the UE needs to be notified to provide the location information and/or the UE needs to be notified to perform privacy verification;
third indication information used to indicate a type of postponing transmission of the location information of the UE;
address information of the GMLC;
identifier information of an LDR.

Optionally, the positioning processing device 1700 further includes:
a first receiving unit, used to receive a first response message sent by the access network node; wherein the first response message is used to indicate confirmation of postponing transmission of the location information of the UE;
a second receiving unit, used to receive the location information of the UE sent by the access network node based on a type of postponing transmission of the location information of the UE supported by the access network node.

Optionally, the type of postponing transmission of the location information of the UE includes at least one of:
periodically sending the location information of the UE;
sending the location information of the UE when a trigger condition is met.

Optionally, the positioning processing device 1700 further includes:
a second sending unit, used to send a cancellation request message to the access network node; wherein the cancellation request message is used to indicate cancellation of obtaining the location information of the UE.

It should be noted here that the above-mentioned device provided in the embodiment of the present disclosure can implement all the method steps implemented in the above-mentioned method embodiment at the GMLC side, and can achieve the same technical effect. The parts and beneficial effects that are the same as the method embodiment in this embodiment will not be described in detail here.

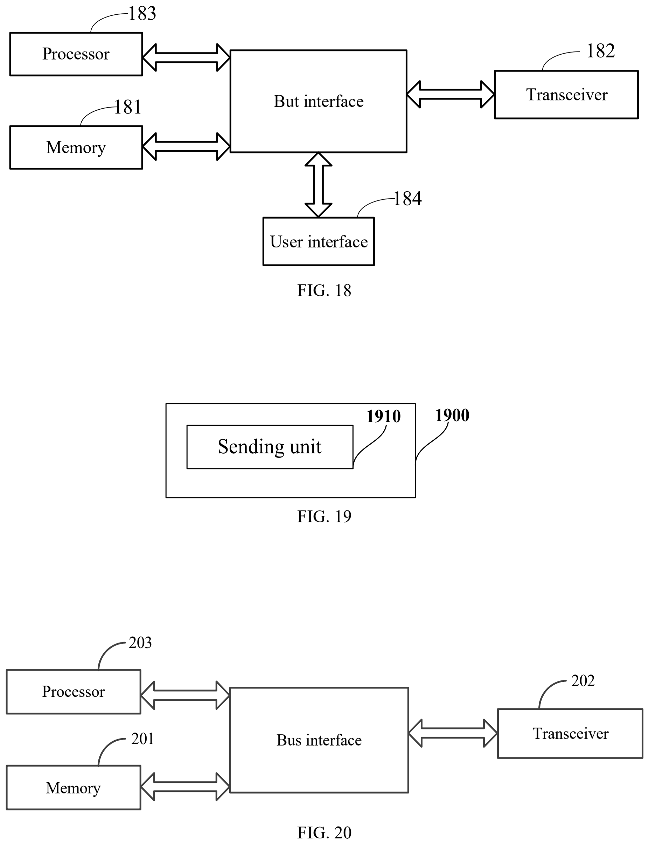

As shown in FIG. 18, this embodiment provides a positioning processing device, such as the positioning processing device applied to a UE, including a memory 181, a transceiver 182, and a processor 183; wherein the memory 181 is used to store a computer program; the transceiver 182 is used to send and receive data under the control of the processor 183; such as the transceiver 182 is used to receive and send data under the control of the processor 183; the processor 183 is used to read the computer program in the memory 181 and perform the following operations:
sending a first request message to an access network node; wherein the first request message is used for at least one of: requesting to obtain location information of the UE, instructing to provide the location information of the UE to a client or an application function entity, and requesting to obtain location assistance information.

Optionally, the first request message carries at least one of the following information:
seventh indication information used to instruct sending a request message to the LMF entity;
QoS of the UE;
a maximum validity time for requesting the location information of the UE;
eighth indication information used to indicate the type of the requested location information of the UE;
a predefined positioning time of the requested location information of the UE;
identifier information of a client;
identifier information of an application function entity;
address information of the GMLC that sends location information to the client or the application function entity;
ninth indication information used to indicate a service type of requesting or providing the location information of the UE;
tenth indication information for instructing to assign a pseudonym;
eleventh indication information used to indicate a type of location assistance information;
twelfth indication information used to indicate an application scenario of the location assistance information.

Optionally, the first request message is a radio resource control RRC message.

Optionally, the processor 183 is used to read the computer program in the memory 181 and perform the following operations:
receiving the location information of the UE sent by the access network node; wherein the location information is carried in an RRC message, and the RRC message further carries at least one of:
a timestamp of the location information;
thirteenth indication information used to indicate whether the location information meets an accuracy requirement;
fourteenth indication information used to indicate whether the location information is successfully provided to the client or the application function entity;
fifteenth indication information used to indicate whether the client or the application function entity successfully processes the location information;
sixteenth indication information is used to indicate a reason why the client or the application function entity fails to process the location information.

Optionally, the processor 183 is used to read the computer program in the memory 181 and perform the following operations:
receiving downlink positioning information sent by the access network node; wherein the downlink positioning information carries location assistance information used for positioning measurement;
performing the positioning measurement based on the downlink positioning information, obtaining a positioning measurement result and sending the positioning measurement result to the access network node; wherein the positioning measurement result is used to perform position solution processing on the UE;
receiving the location information of the UE sent by the access network node.

Among them, in FIG. 18, the bus architecture may include any number of interconnected buses and bridges, specifically one or more processors represented by processor 183 and various circuits of memory represented by memory 181 are linked together. The bus architecture can also link various other circuits such as peripheral devices, voltage regulators and power management circuits together, which are all well known in the art, so they are not further described herein. The bus interface provides an interface. The transceiver 182 can be a plurality of components, that is, a transmitter and a receiver, providing a unit for communicating with various other devices on a transmission medium, and these transmission media include wireless channels, wired channels, optical cables and other transmission media. For different user devices, the user interface 184 can also be an interface that can connect external and internal devices, and the connected devices include but are not limited to keypads, displays, speakers, microphones, joysticks, etc. The processor 183 is responsible for managing the bus architecture and general processing, and the memory 181 can store data used by the processor 183 when performing operations.

Optionally, the processor 183 may be a CPU (central processing unit), an ASIC (Application Specific Integrated Circuit), an FPGA (Field-Programmable Gate Array) or a CPLD (Complex Programmable Logic Device), and the processor may also adopt a multi-core architecture.

The processor calls the computer program stored in the memory to implement any of the methods provided by the embodiments of the present disclosure according to the obtained executable instructions. The processor and the memory can also be arranged physically separately.

It should be noted here that the above-mentioned device provided by the embodiment of the present disclosure can implement all the method steps implemented by the above-mentioned method embodiment at the UE side, and can achieve the same technical effect. The parts and beneficial effects of this embodiment that are the same as the method embodiment will not be described in detail here.

As shown in FIG. 19, an embodiment of the present disclosure provides a positioning processing device 1900, which is applied to a UE and includes:
a sending unit 1910, used to send a first request message to an access network node; wherein the first request message is used for at least one of: requesting to obtain location information of the UE, instructing to provide the location information of the UE to a client or an application function entity, and requesting to obtain location assistance information.

Optionally, the first request message carries at least one of the following information:
seventh indication information used to instruct sending a request message to the LMF entity;
QoS of the UE;
a maximum validity time for requesting the location information of the UE;
eighth indication information used to indicate the type of the requested location information of the UE;
a predefined positioning time of the requested location information of the UE;
identifier information of a client;
identifier information of an application function entity;
address information of the GMLC that sends location information to the client or the application function entity;
ninth indication information used to indicate a service type of requesting or providing the location information of the UE;
tenth indication information for instructing to assign a pseudonym;
eleventh indication information used to indicate a type of location assistance information;
twelfth indication information used to indicate an application scenario of the location assistance information.

Optionally, the first request message is a radio resource control RRC message.

Optionally, the positioning processing device 1900 further includes:
a first receiving unit, used to receive the location information of the UE sent by the access network node; wherein the location information is carried in an RRC message, and the RRC message further carries at least one of:
a timestamp of the location information;
thirteenth indication information used to indicate whether the location information meets an accuracy requirement;
fourteenth indication information used to indicate whether the location information is successfully provided to the client or the application function entity;
fifteenth indication information used to indicate whether the client or the application function entity successfully processes the location information;
sixteenth indication information is used to indicate a reason why the client or the application function entity fails to process the location information.

Optionally, the positioning processing device 1900 further includes:
a second receiving unit, used to receive downlink positioning information sent by the access network node; wherein the downlink positioning information carries location assistance information used for positioning measurement;
a first processing unit, used to perform the positioning measurement based on the downlink positioning information, obtaining a positioning measurement result and sending the positioning measurement result to the access network node; wherein the positioning measurement result is used to perform position solution processing on the UE;
a third receiving unit, used to receive the location information of the UE sent by the access network node.

It should be noted here that the above-mentioned device provided by the embodiment of the present disclosure can implement all the method steps implemented by the above-mentioned method embodiment at the UE side, and can achieve the same technical effect. The parts and beneficial effects of this embodiment that are the same as the method embodiment will not be described in detail here.

As shown in FIG. 20, an embodiment of the present disclosure further provides a positioning processing device, such as the positioning processing device applied to the LMF entity, including a memory 201, a transceiver 202, and a processor 203; wherein the memory 201 is used to store a computer program; the transceiver 202 is used to send and receive data under the control of the processor 203; such as the transceiver 202 is used to receive and send data under the control of the processor 203; the processor 203 is used to read the computer program in the memory 201 and perform the following operations:
receiving a second request message sent by an access network node; wherein the second request message is used to instruct positioning processing of a UE.

Optionally, the processor 203 is used to read the computer program in the memory 201 and perform the following operations:
sending a second response message to the access network node; wherein the second response message is used to indicate sending downlink positioning information to a UE, and the downlink positioning information carries location assistance information for positioning measurement;
receiving a positioning measurement result of the UE sent by the access network node;
performing position solution processing on the UE based on the positioning measurement result, obtaining the location information of the UE and sending the location information of the UE to the access network node

Optionally, the second request message carries at least one of the following information:
identifier information associated with an LCS;
identifier information of the access network node;
identifier information of a serving cell;
fifteenth indication information used to indicate a type of the client requesting to obtain the location information of the UE,
sixteenth indication information used to indicate a positioning protocol supported by the UE;
QoS of the UE;
positioning capability information of the UE;
GAD graphics supported by the UE;
seventeenth indication information used to indicate a service type of requesting or providing the location information of the UE;
eighteenth indication information used to indicate requesting the location information or location assistance information of the UE;
a list of subscribed location assistance information;
a predefined positioning time of the requested location information of the UE;
nineteenth indication information used to indicate a type of the location assistance information.

In FIG. 20, the bus architecture may include any number of interconnected buses and bridges, specifically one or more processors represented by processor 203 and various circuits of memory represented by memory 201 are linked together. The bus architecture may also link together various other circuits such as peripherals, voltage regulators, and power management circuits, which are well known in the art and are therefore not further described herein. The bus interface provides an interface. The transceiver 202 may be a plurality of components, namely, a transmitter and a receiver, providing a unit for communicating with various other devices on a transmission medium, which transmission medium includes a wireless channel, a wired channel, an optical cable, and other transmission media. The processor 203 is responsible for managing the bus architecture and general processing, and the memory 201 may store data used by the processor 203 when performing operations.

The processor 203 may be a central processing unit (CPU), an application specific integrated circuit (ASIC), a field programmable gate array (FPGA) or a complex programmable logic device (CPLD). The processor may also adopt a multi-core architecture.

It should be noted here that the above-mentioned device provided in the embodiment of the present disclosure can implement all the method steps implemented in the above-mentioned method embodiment at the LMF entity side, and can achieve the same technical effect. The parts and beneficial effects of this embodiment that are the same as the method embodiment will not be described in detail here.

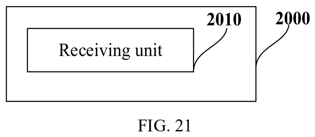

As shown in FIG. 21, an embodiment of the present disclosure provides a positioning processing device 2100, which is applied to a LMF entity, including:
a receiving unit, used to receive a second request message sent by an access network node; wherein the second request message is used to instruct to perform positioning processing on the UE.

Optionally, the positioning processing device 2100 further includes:
a sending unit, used to send a second response message to the access network node; wherein the second response message is used to indicate sending downlink positioning information to a UE, and the downlink positioning information carries location assistance information for positioning measurement;
a second receiving unit, used to receive a positioning measurement result of the UE sent by the access network node;
a processing unit, used to perform position solution processing on the UE based on the positioning measurement result, obtaining the location information of the UE and sending the location information of the UE to the access network node.

Optionally, the second request message carries at least one of the following information:
identifier information associated with an LCS;
identifier information of the access network node;
identifier information of a serving cell;
fifteenth indication information used to indicate a type of the client requesting to obtain the location information of the UE,
sixteenth indication information used to indicate a positioning protocol supported by the UE;
QoS of the UE;
positioning capability information of the UE;
GAD graphics supported by the UE;
seventeenth indication information used to indicate a service type of requesting or providing the location information of the UE;
eighteenth indication information used to indicate requesting the location information or location assistance information of the UE;
a list of subscribed location assistance information;
a predefined positioning time of the requested location information of the UE;
nineteenth indication information used to indicate a type of the location assistance information.

It should be noted that the division of units in the embodiments of the present disclosure is schematic and is only a logical function division. There may be other division methods in actual implementation. In addition, each functional unit in each embodiment of the present disclosure may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on this understanding, the technical solution of the present disclosure is essentially or the part that contributes to the prior art or all or part of the technical solution can be embodied in the form of a software product. The computer software product is stored in a storage medium, including several instructions to enable a computer device (which can be a personal computer, server, or network device, etc.) or a processor to perform all or part of the steps of the method described in each embodiment of the present disclosure. The aforementioned storage medium includes: U disk, mobile hard disk, read-only memory (ROM), random access memory (RAM), disk or optical disk and other media that can store program codes.

The embodiment of the present disclosure also provides a processor-readable storage medium, which stores a computer program. The computer program is used to enable the processor to execute the steps of the positioning processing method on the access network node side, CMLC side, UE side, or LMF entity side, and can achieve the same technical effect. The parts and beneficial effects of this embodiment that are the same as those in the method embodiment will not be described in detail here.

The processor-readable storage medium may be any available medium or data storage device that can be accessed by the processor, including but not limited to magnetic storage (e.g., floppy disk, hard disk, magnetic tape, magneto-optical disk (MO), etc.), optical storage (e.g., compact disk (CD), digital video disk (DVD), Blu-ray Disc (BD), high-definition versatile disc (HVD), etc.), and semiconductor storage (e.g., read-only memory (ROM), erasable programmable read-only memory (EPROM), electrically erasable programmable read-only memory (EEPROM), non-volatile memory (NAND FLASH), solid-state drive (SSD)), etc.

Those skilled in the art will appreciate that the embodiments of the present disclosure may be provided as methods, systems, or computer program products. Therefore, the present disclosure may take the form of a complete hardware embodiment, a complete software embodiment, or an embodiment combining software and hardware. Furthermore, the present disclosure may take the form of a computer program product implemented on one or more computer-usable storage media (including but not limited to disk storage and optical storage, etc.) containing computer-usable program codes.

The present disclosure is described with reference to the flowcharts and/or block diagrams of the methods, devices (systems), and computer program products according to the embodiments of the present disclosure. It should be understood that each process and/or box in the flowchart and/or block diagram, as well as the combination of the processes and/or boxes in the flowchart and/or block diagram, can be implemented by computer executable instructions. These computer executable instructions can be provided to a processor of a general-purpose computer, a special-purpose computer, an embedded processor, or other programmable data processing device to produce a machine, so that the instructions executed by the processor of the computer or other programmable data processing device produce a device for implementing the functions specified in one process or multiple processes in the flowchart and/or one box or multiple boxes in the block diagram.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more flows in the flowchart and/or one or more blocks in the block diagram.

It should be noted that it should be understood that the division of the above modules is only a division of logical functions. In actual implementation, they can be fully or partially integrated into one physical entity, or they can be physically separated. And these modules can all be implemented in the form of software called by processing elements; they can also be all implemented in the form of hardware; some modules can also be implemented in the form of software called by processing elements, and some modules can be implemented in the form of hardware. For example, the determination module can be a separately established processing element, or it can be integrated in a chip of the above-mentioned device for implementation. In addition, it can also be stored in the memory of the above-mentioned device in the form of program code, and called and executed by a processing element of the above-mentioned device. The implementation of other modules is similar. In addition, these modules can be fully or partially integrated together, or they can be implemented independently. The processing element described here can be an integrated circuit with signal processing capabilities. In the implementation process, each step of the above method or each module above can be completed by an integrated logic circuit of hardware in the processor element or instructions in the form of software.

For example, each module, unit, sub-unit or sub-module may be one or more integrated circuits used to implement the above method, such as one or more application specific integrated circuits (ASIC), or one or more digital signal processors (DSP), or one or more field programmable gate arrays (FPGA). For another example, when a module above is implemented in the form of a processing element scheduling program code, the processing element may be a general-purpose processor, such as a central processing unit (CPU) or other processor that can call program code. For another example, these modules may be integrated together and implemented in the form of a system-on-a-chip (SOC).

The terms of "first", "second" in the specification and claims of the present disclosure are used to distinguish similar objects, and are not necessarily used to describe a specific order or sequence. It should be understood that the data used in this way can be interchanged where appropriate, so that the embodiments of the present disclosure described here, such as those illustrated or described here, are implemented in a sequence other than the order. In addition, the terms "including" and "having" and any of their variations are intended to cover non- exclusive inclusions, for example, a process, method, system, product or device that includes a series of steps or units is not necessarily limited to those steps or units clearly listed, but may include other steps or units that are not clearly listed or inherent to these processes, methods, products or devices. In addition, the use of "and/or" in the specification and claims represents at least one of the connected objects, such as A and/or B and/or C, indicating that A alone, B alone, C alone, and A and B are present, B and C are present, A and C are present, and A, B and C are present in 7 situations. Similarly, the use of "at least one of A and B" in the specification and claims should be understood as "A alone, B alone, or A and B are present".

In addition, it should be pointed out that in the apparatus and method of the present disclosure, it is obvious that each component or each step can be decomposed and/or recombined. These decompositions and / or recombinations should be regarded as equivalent schemes of the present disclosure. Moreover, the steps of performing the above series of processing can naturally be performed in chronological order according to the order of description, but it is not necessary to perform them in chronological order, and some steps can be performed in parallel or independently of each other. For those of ordinary skill in the art, it is understandable that all or any steps or components of the method and apparatus of the present disclosure can be implemented in hardware, firmware, software or a combination thereof in any computing device (including processors, storage media, etc.) or a network of computing devices, which can be achieved by those of ordinary skill in the art using their basic programming skills after reading the description of the present disclosure.

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. A positioning processing method, comprising:
receiving, by an access network node, a first request message;
performing, by the access network node, a location management function (LMF) entity selection or reselection based on the first request message to determine a target LMF entity;
sending, by the access network node, a second request message to the target LMF entity; wherein the second request message is used to instruct to perform a positioning processing on a UE.

2. The positioning processing method according to claim 1, wherein the receiving, by an access network node, a first request message, comprises:
receiving, by the access network node, the first request message sent by a gateway mobile location center (GMLC); wherein the first request message is used to request to obtain a location information of the UE;
or,
receiving, by the access network node, the first request message sent by the UE; wherein the first request message is used for at least one of: requesting to obtain the location information of the UE, instructing to provide the location information of the UE to a client or an application function entity, and requesting to obtain location assistance information.

3. The positioning processing method according to claim 2, wherein the first request message sent by the GMLC carries at least one of:
subscription permanent identifier (SUPI) information of the UE;
type information of a client requesting the location information of the UE;
a quality of service (QoS) of the UE;
a geographical area description (GAD) graphics supported by the UE;
first indication information used to indicate a service type for requesting the location information of the UE;
a predefined positioning time of the requested location information of the UE;
second indication information used to indicate that the UE needs to be notified to provide the location information and/or the UE needs to be notified to perform privacy verification;
third indication information used to indicate a type of postponing transmission of the location information of the UE;
address information of the GMLC;
identifier information of a location delay request (LDR).

4. The positioning processing method according to claim 3, wherein after the receiving, by the access network node, the first request message sent by the GMLC, the positioning processing method further comprises:
sending, by the access network node, a notification message to the UE based on the second indication information; wherein the notification message is used to notify the UE to provide the location information and/or request the privacy verification;
receiving, by the access network node, a notification response message sent by the UE; wherein the notification response message carries fourth indication information used to indicate whether to allow providing the location information and/or a result of the privacy verification;
in the case where the fourth indication information is used to indicate allowing to providing the location information and/or the result of the privacy verification of authorized, performing, by the access network node, LMF entity selection or reselection.

5. The positioning processing method according to claim 4, further comprising:
in a case where the access network node does not receive the notification response message, or the fourth indication information is used to indicate that not allowing to provide the location information and/or the result of the privacy verification of not authorized, sending, by the access network node, fifth indication information used to instruct the UE to reject to provide the location information to the GMLC.

6. The positioning processing method according to claim 4 or 5, wherein the notification response message further carries at least one of:
privacy setting information, used to instruct the UE to allow or reject to continue to provide the location information;
time information, used to instruct the UE to reject to continue to provide the location information before a target time and/or to reject to continue to provide the location information within a target duration.

7. The positioning processing method according to claim 3, after the receiving, by the access network node, the first request message sent by the GMLC, the positioning processing method further comprises:
sending, by the access network node, a first response message to the GMLC based on the third indication information; wherein the first response message is used to indicate confirmation of postponing transmission of the location information of the UE;
after the sending, by the access network node, the second request message to the target LMF entity, the positioning processing method further comprises:
receiving, by the access network node, the location information of the UE;
sending, by the access network node, the location information of the UE to the GMLC according to a type of postponing transmission of the location information of the UE supported by the access network node.

8. The positioning processing method according to claim 7, wherein the type of postponing transmission of the location information of the UE comprises at least one of:
periodically sending the location information of the UE;
sending the location information of the UE when a trigger condition is met.

9. The positioning processing method according to claim 3, after the receiving, by the access network node, the first request message sent by the GMLC, the positioning processing method further comprises:
in the case where the UE is in an idle state of connection management (CM IDLE), sending, by the access network node, a third request message to the UE; wherein the third request message is used to request to establish a signaling connection to the UE;
receiving, by the access network node, a third response message sent by the UE;
in a case where the third response message indicates that the signaling connection is successful, performing, by the access network node, the LMF entity selection or reselection.

10. The positioning processing method according to claim 9, after the receiving, by the access network node, the third response message sent by the UE, the positioning process method further comprises:
in a case where the third response message indicates that the signaling connection fails, sending, by the access network node, a most recently obtained location information of the UE to the GMLC.

11. The positioning processing method according to claim 2, after the receiving, by the access network node, the first request message sent by the GMLC, the positioning processing further comprises:
receiving, by the access network node, a cancellation request message sent by the GMLC;
sending, by the access network node, sixth indication information for indicating cancellation of obtaining the location information of the UE to the target LMF entity and the UE respectively based on the cancellation request message.

12. The positioning processing method according to claim 2, wherein the first request message sent by the UE carries at least one of:
seventh indication information used to instruct sending a request message to the LMF entity;
QoS of the UE;
a maximum validity time for requesting the location information of the UE;
eighth indication information used to indicate the type of the requested location information of the UE;
a predefined positioning time of the requested location information of the UE;
identifier information of a client;
identifier information of an application function entity;
address information of the GMLC that sends location information to the client or the application function entity;
ninth indication information used to indicate a service type of requesting or providing the location information of the UE;
tenth indication information for instructing to assign a pseudonym;
eleventh indication information used to indicate a type of location assistance information;
twelfth indication information used to indicate an application scenario of the location assistance information.

13. The positioning processing method according to claim 2 or 12, wherein the first request message sent by the UE is a radio resource control (RRC) message.

14. The positioning processing method according to claim 2 or 12, wherein after the sending, by the access network node, the second request message to the target LMF entity, the positioning processing method further comprises:
receiving, by the access network node, the location information of the UE sent by the target LMF entity;
sending, by the access network node, the location information to the UE; wherein the location information is carried in an RRC message, and the RRC message further carries at least one of:
a timestamp of the location information;
thirteenth indication information used to indicate whether the location information meets an accuracy requirement;
fourteenth indication information used to indicate whether the location information is successfully provided to the client or the application function entity;
fifteenth indication information used to indicate whether the client or the application function entity successfully processes the location information;
sixteenth indication information is used to indicate a reason why the client or the application function entity fails to process the location information.

15. The positioning processing method according to claim 1, wherein the second request message carries at least one of:
identifier information associated with a location service (LCS);
identifier information of the access network node;
identifier information of a serving cell;
fifteenth indication information used to indicate a type of the client requesting to obtain the location information of the UE,
sixteenth indication information used to indicate a positioning protocol supported by the UE;
QoS of the UE;
positioning capability information of the UE;
GAD graphics supported by the UE;
seventeenth indication information used to indicate a service type of requesting or providing the location information of the UE;
eighteenth indication information used to indicate requesting the location information or location assistance information of the UE;
a list of subscribed location assistance information;
a predefined positioning time of the requested location information of the UE;
nineteenth indication information used to indicate a type of the location assistance information.

16. The positioning processing method according to claim 1 or 2, after the sending, by the access network node, the second request message to the target LMF entity, the positioning processing method further comprises:
receiving, by the access network node, a second response message sent by the target LMF entity;
sending, by the access network node, downlink positioning information to the UE based on the second response message; wherein the downlink positioning information carries location assistance information used for positioning measurement;
receiving, by the access network node, the positioning measurement result sent by the UE, and sending the positioning measurement result to the target LMF entity;
receiving, by the access network node, the location information of the UE sent by the target LMF entity based on the positioning measurement result, and sending the location information to the UE or GMLC.

17. A positioning processing method, comprising:
sending, by a GMLC, a first request message to an access network node; wherein the first request message is used to request to obtain location information of a UE.

18. The positioning processing method according to claim 17, wherein the first request message carries at least one of:
SUPI information of the UE;
type information of a client requesting the location information of the UE;
QoS of the UE;
a GAD graphics supported by the UE;
first indication information used to indicate a service type for requesting the location information of the UE;
a predefined positioning time of the requested location information of the UE;
second indication information used to indicate that the UE needs to be notified to provide the location information and/or the UE needs to be notified to perform privacy verification;
third indication information used to indicate a type of postponing transmission of the location information of the UE;
address information of the GMLC;
identifier information of an LDR.

19. The positioning processing method according to claim 17, wherein after the sending, by the GMLC, the first request message to the access network node, the positioning processing method further comprises:
receiving, by the GMLC, a first response message sent by the access network node; wherein the first response message is used to indicate confirmation of postponing transmission of the location information of the UE;
receiving, by the GMLC, the location information of the UE sent by the access network node based on a type of postponing transmission of the location information of the UE supported by the access network node.

20. The positioning processing method according to claim 19, wherein the type of postponing transmission of the location information of the UE comprises at least one of:
periodically sending the location information of the UE;
sending the location information of the UE when a trigger condition is met.

21. The positioning processing method according to claim 17, wherein after the sending, by the GMLC the first request message to the access network node, the positioning processing method further comprises:
sending, by the GMLC, a cancellation request message to the access network node; wherein the cancellation request message is used to indicate cancellation of obtaining the location information of the UE.

22. A positioning processing method, comprising:
sending, by a UE, a first request message to an access network node; wherein the first request message is used for at least one of: requesting to obtain location information of the UE, instructing to provide the location information of the UE to a client or an application function entity, and requesting to obtain location assistance information.

23. The positioning processing method according to claim 22, wherein the first request message carries at least one of:
seventh indication information used to instruct sending a request message to the LMF entity;
QoS of the UE;
a maximum validity time for requesting the location information of the UE;
eighth indication information used to indicate the type of the requested location information of the UE;
a predefined positioning time of the requested location information of the UE;
identifier information of a client;
identifier information of an application function entity;
address information of the GMLC that sends location information to the client or the application function entity;
ninth indication information used to indicate a service type of requesting or providing the location information of the UE;
tenth indication information for instructing to assign a pseudonym;
eleventh indication information used to indicate a type of location assistance information;
twelfth indication information used to indicate an application scenario of the location assistance information.

24. The positioning processing method according to claim 22 or 23, wherein the first request message sent by the UE is an RRC message.

25. The positioning processing method according to claim 22 or 23, wherein after the sending, by the UE, the first request message to the access network node, the positioning processing method further comprises:
receiving, by the UE, the location information of the UE sent by the access network node; wherein the location information is carried in an RRC message, and the RRC message further carries at least one of:
a timestamp of the location information;
thirteenth indication information used to indicate whether the location information meets an accuracy requirement;
fourteenth indication information used to indicate whether the location information is successfully provided to the client or the application function entity;
fifteenth indication information used to indicate whether the client or the application function entity successfully processes the location information;
sixteenth indication information is used to indicate a reason why the client or the application function entity fails to process the location information.

26. The positioning processing method according to claim 22 or 23, wherein after the sending, by the UE, the first request message to the access network node, the positioning processing method further comprises:
receiving, by the UE, downlink positioning information sent by the access network node; wherein the downlink positioning information carries location assistance information used for positioning measurement;
performing, by the UE, the positioning measurement based on the downlink positioning information, obtaining a positioning measurement result and sending the positioning measurement result to the access network node; wherein the positioning measurement result is used to perform position solution processing on the UE;
receiving, by the UE, the location information of the UE sent by the access network node.

27. A positioning processing method, comprising:
receiving, by an LMF entity, a second request message sent by an access network node; wherein the second request message is used to instruct to perform a positioning processing on a UE.

28. The positioning processing method according to claim 27, wherein after the receiving, by the LMF entity, the second request message sent by the access network node, the positioning processing method further comprises:
sending, by the LMF entity, a second response message to the access network node; wherein the second response message is used to indicate sending downlink positioning information to a UE, and the downlink positioning information carries location assistance information for positioning measurement;
receiving, by the LMF entity, a positioning measurement result of the UE sent by the access network node;
performing, by the LMF entity, position solution processing on the UE based on the positioning measurement result, obtaining the location information of the UE and sending the location information of the UE to the access network node.

29. The positioning processing method according to claim 28, wherein the second request message carries at least one of:
identifier information associated with an LCS;
identifier information of the access network node;
identifier information of a serving cell;
fifteenth indication information used to indicate a type of the client requesting to obtain the location information of the UE,
sixteenth indication information used to indicate a positioning protocol supported by the UE;
QoS of the UE;
positioning capability information of the UE;
GAD graphics supported by the UE;
seventeenth indication information used to indicate a service type of requesting or providing the location information of the UE;
eighteenth indication information used to indicate requesting the location information or location assistance information of the UE;
a list of subscribed location assistance information;
a predefined positioning time of the requested location information of the UE;
nineteenth indication information used to indicate a type of the location assistance information.

30. A positioning processing device, comprising a memory, a transceiver, and a processor; wherein
the memory is used to store a computer program; the transceiver is used to send and receive data under the control of the processor; the processor is used to read the computer program in the memory and perform the following operations:
receiving a first request message;
performing an LMF entity selection or reselection based on the first request message to determine a target LMF entity;
sending a second request message to the target LMF entity; wherein the second request message is used to instruct to perform a positioning processing on a UE.

31. The positioning processing device according to claim 30, wherein the processor is used to read the computer program in the memory and perform the following operations:
receiving the first request message sent by a GMLC; wherein the first request message is used to request to obtain a location information of the UE;
or,
receiving the first request message sent by the UE; wherein the first request message is used for at least one of: requesting to obtain the location information of the UE, instructing to provide the location information of the UE to a client or an application function entity, and requesting to obtain location assistance information.

32. The positioning processing device according to claim 31, wherein the first request message sent by the GMLC carries at least one of:
SUPI information of the UE;
type information of a client requesting the location information of the UE;
a QoS of the UE;
a geographical area description (GAD) graphics supported by the UE;
first indication information used to indicate a service type for requesting the location information of the UE;
a predefined positioning time of the requested location information of the UE;
second indication information used to indicate that the UE needs to be notified to provide the location information and/or the UE needs to be notified to perform privacy verification;
third indication information used to indicate a type of postponing transmission of the location information of the UE;
address information of the GMLC;
identifier information of an LDR.

33. The positioning processing device according to claim 32, wherein the processor is used to read the computer program in the memory and perform the following operations:
sending a notification message to the UE based on the second indication information; wherein the notification message is used to notify the UE to provide the location information and/or request the privacy verification;
receiving a notification response message sent by the UE; wherein the notification response message carries fourth indication information used to indicate whether to allow providing the location information and/or a result of the privacy verification;
in the case where the fourth indication information is used to indicate allowing to providing the location information and/or the result of the privacy verification of authorized, performing the LMF entity selection or reselection.

34. The positioning processing device according to claim 33, wherein the processor is used to read the computer program in the memory and perform the following operations:
in a case where the notification response message is not received, or the fourth indication information is used to indicate allowing to provide the location information and/or the result of the privacy verification of not authorized, sending fifth indication information used to instruct the UE to reject to provide the location information to the GMLC.

35. The positioning processing device according to claim 32, wherein the processor is used to read the computer program in the memory and perform the following operations:
sending a first response message to the GMLC based on the third indication information; wherein the first response message is used to indicate confirmation of postponing transmission of the location information of the UE;
receiving the location information of the UE;
sending the location information of the UE to the GMLC according to a type of postponing transmission of the location information of the UE supported.

36. The positioning processing device according to claim 32, wherein the processor is used to read the computer program in the memory and perform the following operations:
in the case where the UE is in a CM IDLE state, sending a third request message to the UE; wherein the third request message is used to request to establish a signaling connection to the UE;
receiving a third response message sent by the UE;
in a case where the third response message indicates that the signaling connection is successful, performing the selecting or reselecting of the LMF entity.

37. The positioning processing device according to claim 36, wherein the processor is used to read the computer program in the memory and perform the following operations:
in a case where the third response message indicates that the signaling connection fails, sending a most recently obtained location information of the UE to the GMLC.

38. The positioning processing device according to claim 31, wherein the processor is used to read the computer program in the memory and perform the following operations:
receiving a cancellation request message sent by the GMLC;
sending sixth indication information for indicating cancellation of obtaining the location information of the UE to the target LMF entity and the UE respectively based on the cancellation request message.

39. The positioning processing device according to claim 31, wherein the processor is used to read the computer program in the memory and perform the following operations:
receiving the location information of the UE sent by the target LMF entity;
sending the location information to the UE; wherein the location information is carried in an RRC message, and the RRC message further carries at least one of:
a timestamp of the location information;
thirteenth indication information used to indicate whether the location information meets an accuracy requirement;
fourteenth indication information used to indicate whether the location information is successfully provided to the client or the application function entity;
fifteenth indication information used to indicate whether the client or the application function entity successfully processes the location information;
sixteenth indication information is used to indicate a reason why the client or the application function entity fails to process the location information.

40. The positioning processing device according to claim 30 or 31, wherein the processor is used to read the computer program in the memory and perform the following operations:
receiving a second response message sent by the target LMF entity;
sending downlink positioning information to the UE based on the second response message; wherein the downlink positioning information carries location assistance information used for positioning measurement;
receiving the positioning measurement result sent by the UE, and sending the positioning measurement result to the target LMF entity;
receiving the location information of the UE sent by the target LMF entity based on the positioning measurement result, and sending the location information to the UE or GMLC.

41. A positioning processing device, comprising:
a first receiving unit, used to receive a first request message;
a first processing unit, used to perform an LMF entity selection or reselection based on the first request message to determine a target LMF entity;
a first sending unit, used to send a second request message to the target LMF entity; wherein the second request message is used to instruct to perform a positioning processing on a UE.

42. The positioning processing device according to claim 41, wherein the first receiving unit is further used to:
receive the first request message sent by a GMLC; wherein the first request message is used to request to obtain a location information of the UE;
or,
receive the first request message sent by the UE; wherein the first request message is used for at least one of: requesting to obtain the location information of the UE, instructing to provide the location information of the UE to a client or an application function entity, and requesting to obtain location assistance information.

43. The positioning processing device according to claim 42, wherein the first request message sent by the GMLC carries at least one of:
SUPI information of the UE;
type information of a client requesting the location information of the UE;
a QoS of the UE;
a geographical area description (GAD) graphics supported by the UE;
first indication information used to indicate a service type for requesting the location information of the UE;
a predefined positioning time of the requested location information of the UE;
second indication information used to indicate that the UE needs to be notified to provide the location information and/or the UE needs to be notified to perform privacy verification;
third indication information used to indicate a type of postponing transmission of the location information of the UE;
address information of the GMLC;
identifier information of an LDR.

44. The positioning processing device according to claim 43, wherein the positioning processing device further comprises:
a second receiving unit, used to send a notification message to the UE based on the second indication information; wherein the notification message is used to notify the UE to provide the location information and/or request the privacy verification;
a third receiving unit, used to receive a notification response message sent by the UE; wherein the notification response message carries fourth indication information used to indicate whether to allow providing the location information and/or a result of the privacy verification;
a second processing unit, used to, in the case where the fourth indication information is used to indicate that it is allowed to providing the location information and/or the result of the privacy verification is authorized, perform LMF entity selection or reselection.

45. The positioning processing device according to claim 44, further comprising:
a second sending unit used to, in a case where the notification response message is not received, or the fourth indication information is used to indicate not allowing to provide the location information and/or the result of the privacy verification of not authorized, send fifth indication information used to instruct the UE to reject to provide the location information to the GMLC.

46. The positioning processing device according to claim 44 or 45, wherein the notification response message further carries at least one of:
privacy setting information, used to instruct the UE to allow or reject to continue to provide the location information;
time information used to instruct the UE to reject to continue to provide the location information before a target time and/or to reject to continue to provide the location information within a target duration.

47. The positioning processing device according to claim 43, further comprising:
a third sending unit, used to send a first response message to the GMLC based on the third indication information; wherein the first response message is used to indicate confirmation of postponing transmission of the location information of the UE;
a fourth receiving unit, used to receive the location information of the UE;
a fourth sending unit, used to send the location information of the UE to the GMLC according to a type of postponing transmission of the location information of the UE supported.

48. The positioning processing device according to claim 47, wherein the type of postponing transmission of the location information of the UE comprises at least one of:
periodically sending the location information of the UE;
sending the location information of the UE when a trigger condition is met.

49. The positioning processing device according to claim 43, further comprising:
a fifth sending unit used to, in the case where the UE is in a CM IDLE state, send a third request message to the UE; wherein the third request message is used to request to establish a signaling connection to the UE;
a fifth receiving unit, used to receive a third response message sent by the UE;
a fourth processing unit used to, in a case where the third response message indicates that the signaling connection is successful, perform LMF entity selection or reselection.

50. The positioning processing device according to claim 49, further comprising:
a sixth sending unit used to, in a case where the third response message indicates that the signaling connection fails, send a most recently obtained location information of the UE to the GMLC.

51. The positioning processing device according to claim 42, further comprising:
a sixth receiving unit used to receive a cancellation request message sent by the GMLC;
a fifth processing unit used to send sixth indication information for indicating cancellation of obtaining the location information of the UE to the target LMF entity and the UE respectively based on the cancellation request message.

52. The positioning processing device according to claim 42, wherein the first request message sent by the UE carries at least one of:
seventh indication information used to instruct sending a request message to the LMF entity;
QoS of the UE;
a maximum validity time for requesting the location information of the UE;
eighth indication information used to indicate the type of the requested location information of the UE;
a predefined positioning time of the requested location information of the UE;
identifier information of a client;
identifier information of an application function entity;
address information of the GMLC that sends location information to the client or the application function entity;
ninth indication information used to indicate a service type of requesting or providing the location information of the UE;
tenth indication information for instructing to assign a pseudonym;
eleventh indication information used to indicate a type of location assistance information;
twelfth indication information used to indicate an application scenario of the location assistance information.

53. The positioning processing device according to claim 42 or 52, wherein the first request message sent by the UE is an RRC message.

54. The positioning processing device according to claim 42 or 52, further comprising:
a seventh receiving unit used to receive the location information of the UE sent by the target LMF entity;
a seventh sending unit used to send the location information to the UE; wherein the location information is carried in an RRC message, and the RRC message further carries at least one of:
a timestamp of the location information;
thirteenth indication information used to indicate whether the location information meets an accuracy requirement;
fourteenth indication information used to indicate whether the location information is successfully provided to the client or the application function entity;
fifteenth indication information used to indicate whether the client or the application function entity successfully processes the location information;
sixteenth indication information is used to indicate a reason why the client or the application function entity fails to process the location information.

55. The positioning processing device according to claim 41, further comprises:
an eighth receiving unit used to receive a second response message sent by the target LMF entity;
an eighth sending unit used to send downlink positioning information to the UE based on the second response message; wherein the downlink positioning information carries location assistance information used for positioning measurement;
a ninth receiving unit used to receive the positioning measurement result sent by the UE, and send the positioning measurement result to the target LMF entity;
a tenth receiving unit used to receive the location information of the UE sent by the target LMF entity based on the positioning measurement result, and send the location information to the UE or GMLC.

56. The positioning processing device according to claim 41, the second request message carries at least one of:
identifier information associated with an LCS;
identifier information of the access network node;
identifier information of a serving cell;
fifteenth indication information used to indicate a type of the client requesting to obtain the location information of the UE,
sixteenth indication information used to indicate a positioning protocol supported by the UE;
QoS of the UE;
positioning capability information of the UE;
GAD graphics supported by the UE;
seventeenth indication information used to indicate a service type of requesting or providing the location information of the UE;
eighteenth indication information used to indicate requesting the location information or location assistance information of the UE;
a list of subscribed location assistance information;
a predefined positioning time of the requested location information of the UE;
nineteenth indication information used to indicate a type of the location assistance information.

57. A positioning processing device, comprising a memory, a transceiver, and a processor; wherein
the memory is used to store a computer program; the transceiver is used to send and receive data under the control of the processor; the processor is used to read the computer program in the memory and perform the following operations:
sending a first request message to an access network node; wherein the first request message is used to request to obtain location information of a UE.

58. The positioning processing device according to claim 57, wherein the first request message carries at least one of:
SUPI information of the UE;
type information of a client requesting the location information of the UE;
QoS of the UE;
a GAD graphics supported by the UE;
first indication information used to indicate a service type for requesting the location information of the UE;
a predefined positioning time of the requested location information of the UE;
second indication information used to indicate that the UE needs to be notified to provide the location information and/or the UE needs to be notified to perform privacy verification;
third indication information used to indicate a type of postponing transmission of the location information of the UE;
address information of the GMLC;
identifier information of an LDR.

59. The positioning processing device according to claim 57, wherein the processor is used to read the computer program in the memory and perform the following operations:
receiving a first response message sent by the access network node; wherein the first response message is used to indicate confirmation of postponing transmission of the location information of the UE;
receiving the location information of the UE sent by the access network node based on a type of postponing transmission of the location information of the UE supported by the access network node.

60. The positioning processing device according to claim 57, wherein the processor is used to read the computer program in the memory and perform the following operations:
sending a cancellation request message to the access network node; wherein the cancellation request message is used to indicate cancellation of obtaining the location information of the UE.

61. A positioning processing device, comprising:
a first sending unit used to send a first request message to an access network node; wherein the first request message is used to request to obtain location information of a UE.

62. The positioning processing device according to claim 61, wherein the first request message carries at least one of:
SUPI information of the UE;
type information of a client requesting the location information of the UE;
QoS of the UE;
a GAD graphics supported by the UE;
first indication information used to indicate a service type for requesting the location information of the UE;
a predefined positioning time of the requested location information of the UE;
second indication information used to indicate that the UE needs to be notified to provide the location information and/or the UE needs to be notified to perform privacy verification;
third indication information used to indicate a type of postponing transmission of the location information of the UE;
address information of the GMLC;
identifier information of an LDR.

63. The positioning processing device according to claim 61, wherein the positioning processing device further comprises:
a first receiving unit used to receive a first response message sent by the access network node; wherein the first response message is used to indicate confirmation of postponing transmission of the location information of the UE;
a second receiving unit used to receive the location information of the UE sent by the access network node based on a type of postponing transmission of the location information of the UE supported by the access network node.

64. The positioning processing device according to claim 63, wherein the type of postponing transmission of the location information of the UE comprises at least one of:
periodically sending the location information of the UE;
sending the location information of the UE when a trigger condition is met.

65. The positioning processing device according to claim 61, further comprising:
a second sending unit used to send a cancellation request message to the access network node; wherein the cancellation request message is used to indicate cancellation of obtaining the location information of the UE.

66. A positioning processing device, comprising a memory, a transceiver, and a processor;
the memory is used to store a computer program; the transceiver is used to send and receive data under the control of the processor; the processor is used to read the computer program in the memory and perform the following operations:
sending a first request message to an access network node; wherein the first request message is used for at least one of: requesting to obtain location information of the UE, instructing to provide the location information of the UE to a client or an application function entity, and requesting to obtain location assistance information.

67. The positioning processing device according to claim 66, wherein the first request message carries at least one of:
seventh indication information used to instruct sending a request message to the LMF entity;
QoS of the UE;
a maximum validity time for requesting the location information of the UE;
eighth indication information used to indicate the type of the requested location information of the UE;
a predefined positioning time of the requested location information of the UE;
identifier information of a client;
identifier information of an application function entity;
address information of the GMLC that sends location information to the client or the application function entity;
ninth indication information used to indicate a service type of requesting or providing the location information of the UE;
tenth indication information for instructing to assign a pseudonym;
eleventh indication information used to indicate a type of location assistance information;
twelfth indication information used to indicate an application scenario of the location assistance information.

68. The positioning processing device according to claim 66 or 67, wherein the processor is used to read the computer program in the memory and perform the following operations:
receiving the location information of the UE sent by the access network node; wherein the location information is carried in an RRC message, and the RRC message further carries at least one of:
a timestamp of the location information;
thirteenth indication information used to indicate whether the location information meets an accuracy requirement;
fourteenth indication information used to indicate whether the location information is successfully provided to the client or the application function entity;
fifteenth indication information used to indicate whether the client or the application function entity successfully processes the location information;
sixteenth indication information is used to indicate a reason why the client or the application function entity fails to process the location information.

69. The positioning processing device according to claim 66 or 67, wherein the processor is used to read the computer program in the memory and perform the following operations:
receiving downlink positioning information sent by the access network node; wherein the downlink positioning information carries location assistance information used for positioning measurement;
performing the positioning measurement based on the downlink positioning information, obtaining a positioning measurement result and sending the positioning measurement result to the access network node; wherein the positioning measurement result is used to perform position solution processing on the UE;
receiving the location information of the UE sent by the access network node.

70. A positioning processing device, comprising:
a sending unit used to send a first request message to an access network node; wherein the first request message is used for at least one of: requesting to obtain location information of the UE, instructing to provide the location information of the UE to a client or an application function entity, and requesting to obtain location assistance information.

71. The positioning processing device according to claim 70, wherein the first request message carries at least one of:
seventh indication information used to instruct sending a request message to the LMF entity;
QoS of the UE;
a maximum validity time for requesting the location information of the UE;
eighth indication information used to indicate the type of the requested location information of the UE;
a predefined positioning time of the requested location information of the UE;
identifier information of a client;
identifier information of an application function entity;
address information of the GMLC that sends location information to the client or the application function entity;
ninth indication information used to indicate a service type of requesting or providing the location information of the UE;
tenth indication information for instructing to assign a pseudonym;
eleventh indication information used to indicate a type of location assistance information;
twelfth indication information used to indicate an application scenario of the location assistance information.

72. The positioning processing device according to claim 70 or 71, wherein the first request message is an RRC message.

73. The positioning processing device according to claim 70 or 71, wherein the positioning processing device further comprises:
a first receiving unit used to receive the location information of the UE sent by the access network node; wherein the location information is carried in an RRC message, and the RRC message further carries at least one of:
a timestamp of the location information;
thirteenth indication information used to indicate whether the location information meets an accuracy requirement;
fourteenth indication information used to indicate whether the location information is successfully provided to the client or the application function entity;
fifteenth indication information used to indicate whether the client or the application function entity successfully processes the location information;
sixteenth indication information is used to indicate a reason why the client or the application function entity fails to process the location information.

74. The positioning processing device according to claim 70 or 71, further comprising:
a second receiving unit used to receive downlink positioning information sent by the access network node; wherein the downlink positioning information carries location assistance information used for positioning measurement;
a first processing unit used to perform the positioning measurement based on the downlink positioning information, obtaining a positioning measurement result and sending the positioning measurement result to the access network node; wherein the positioning measurement result is used to perform position solution processing on the UE;
a third receiving unit, used to receive the location information of the UE sent by the access network node.

75. A positioning processing device, comprising a memory, a transceiver, and a processor;
the memory is used to store a computer program; the transceiver is used to send and receive data under the control of the processor; the processor is used to read the computer program in the memory and perform the following operations:
receiving a second request message sent by an access network node; wherein the second request message is used to instruct positioning processing of a UE.

76. The positioning processing device according to claim 75, wherein the processor is used to read the computer program in the memory and perform the following operations:
sending a second response message to the access network node; wherein the second response message is used to indicate sending downlink positioning information to a UE, and the downlink positioning information carries location assistance information for positioning measurement;
receiving a positioning measurement result of the UE sent by the access network node;
performing position solution processing on the UE based on the positioning measurement result, obtaining the location information of the UE and sending the location information of the UE to the access network node.

77. A positioning processing device, comprising:
a first receiving unit used to receive a second request message sent by an access network node; wherein the second request message is used to instruct to perform positioning processing on the UE.

78. The positioning processing device according to claim 77, further comprising:
a sending unit used to send a second response message to the access network node; wherein the second response message is used to indicate sending downlink positioning information to a UE, and the downlink positioning information carries location assistance information for positioning measurement;
a second receiving unit used to receive a positioning measurement result of the UE sent by the access network node;
a processing unit used to perform position solution processing on the UE based on the positioning measurement result, obtaining the location information of the UE and sending the location information of the UE to the access network node.

79. The positioning processing device according to claim 77, wherein the second request message carries at least one of:
identifier information associated with an LCS;
identifier information of the access network node;
identifier information of a serving cell;
fifteenth indication information used to indicate a type of the client requesting to obtain the location information of the UE,
sixteenth indication information used to indicate a positioning protocol supported by the UE;
QoS of the UE;
positioning capability information of the UE;
GAD graphics supported by the UE;
seventeenth indication information used to indicate a service type of requesting or providing the location information of the UE;
eighteenth indication information used to indicate requesting the location information or location assistance information of the UE;
a list of subscribed location assistance information;
a predefined positioning time of the requested location information of the UE;
nineteenth indication information used to indicate a type of the location assistance information.

80. A processor-readable storage medium, storing a computer program thereon, wherein the computer program causes the processor to execute the steps of the positioning processing method according to any one of claims 1 to 16, or the computer program causes the processor to execute the steps of the positioning processing method according to any one of claims 17 to 21, or the computer program causes the processor to execute the steps of the positioning processing method according to any one of claims 22 to 26, or the computer program causes the processor to execute the steps of the positioning processing method according to any one of claims 27 to 29.
